(19) Europäisches Patentamt / European Patent Office / Office européen des brevets

(11) **EP 4 523 988 A1**

(12) **EUROPEAN PATENT APPLICATION**
published in accordance with Art. 153(4) EPC

(43) Date of publication:
**19.03.2025 Bulletin 2025/12**

(21) Application number: **22944084.7**

(22) Date of filing: **28.05.2022**

(51) International Patent Classification (IPC):
**B60W 40/09** (2012.01)    **B60W 50/14** (2020.01)

(52) Cooperative Patent Classification (CPC):
**B60W 40/09; B60W 50/14**

(86) International application number:
**PCT/CN2022/095804**

(87) International publication number:
**WO 2023/230740 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **HU, Haorui
  Shenzhen, Guangdong 518129 (CN)**
• **LIU, Liliang
  Shenzhen, Guangdong 518129 (CN)**
• **HU, Fengwei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **ABNORMAL DRIVING BEHAVIOR IDENTIFICATION METHOD AND DEVICE AND VEHICLE**

(57)    A method and an apparatus for identifying abnormal driving behavior may be applied to a new energy vehicle or an intelligent vehicle, so that abnormal driving behavior can be detected without a need to provide an additional sensor, and a limitation imposed on a sensor when the sensor detects the abnormal driving behavior can be avoided. The method includes: obtaining a first manipulation parameter, a first motion status parameter, and first environment information (S410), where the first manipulation parameter is a manipulation parameter for controlling driving of a transportation means at a first moment, the first motion status parameter indicates a motion status of the transportation means at the first moment, and the first environment information indicates an ambient environment in which the transportation means is located at the first moment; determining a first expected manipulation parameter based on the first motion status parameter and the first environment information and by using a driver model (S430); and determining, based on the first manipulation parameter and the first expected manipulation parameter, whether there is abnormal driving behavior (S450).

FIG. 4

## Description

## TECHNICAL FIELD

Embodiments of this application relate to the safety field, and more specifically, to a method and an apparatus for identifying abnormal driving behavior, and a transportation means.

## BACKGROUND

In recent years, with rapid development of social economy, large-scale construction of urban roads, and rapid growth of transportation means in quantity, an incidence of traffic accidents is rising. For a transportation means controlled by a driver, the driver controls driving of the transportation means based on driving experience of the driver under a condition of perceiving an ambient environment. In this case, behavior of the driver has a critical impact on driving safety. However, during driving, the driver may inevitably encounter situations such as fatigue driving, distraction, emotional driving, and a sudden disease. In this case, behavior of manipulating the transportation means, for example, abnormal operations on a steering wheel, an accelerator pedal, a brake pedal, and the like of a vehicle, will directly affect driving safety. Therefore, detecting driving behavior of the driver and identifying abnormal driving behavior are of great significance for improving a driving ability of the driver, reducing a driving load of the driver, and essentially reducing occurrence of traffic accidents.

In the conventional technology, for purpose of detecting abnormal driving behavior, a camera is usually configured to collect an image of a body or a face of a user, and analyze abnormal driving behavior of the user by performing feature extraction; but in this manner, detection cannot be performed when light is poor or the user is blocked. In another detection method based on a wearable sensor, an abnormal driving status of the user is analyzed and identified based on physiological feature data of a user, but this manner is limited by collection of vital sign data of the user. In addition, in the foregoing method, additional costs of a sensor are usually required. Therefore, how to independently and accurately detect abnormal driving behavior of a user becomes an urgent problem to be resolved.

## SUMMARY

Embodiments of this application provide a method and an apparatus for identifying abnormal driving behavior, so that abnormal driving behavior of a user can be independently and accurately identified without a need to provide an additional sensor. This can reduce costs of detecting the abnormal driving behavior.

According to a first aspect, a method for identifying abnormal driving behavior is provided. The method includes: obtaining a first manipulation parameter, a first motion status parameter, and first environment information, where the first manipulation parameter is a manipulation parameter for controlling driving of a transportation means at a first moment, the first motion status parameter indicates a motion status of the transportation means at the first moment, and the first environment information indicates an ambient environment in which the transportation means is located at the first moment; determining a first expected manipulation parameter based on the first motion status parameter and the first environment information and by using a driver model; and determining, based on the first manipulation parameter and the first expected manipulation parameter, whether there is abnormal driving behavior.

In embodiments of this application, whether there is abnormal driving behavior on the transportation means is determined based on a manipulation parameter output by a user and a manipulation parameter predicted by the driver model, so that abnormal driving behavior can be detected without a need to provide an additional sensor. In addition, because the detection manner is directly based on the manipulation parameter of the user for the transportation means, a limitation imposed on a sensor when the sensor detects the abnormal driving behavior can be avoided, and a delay of detecting the abnormal driving behavior can also be reduced.

With reference to the first aspect, in some implementations of the first aspect, the method further includes: obtaining a historical manipulation parameter sequence, where the historical manipulation parameter sequence includes at least one manipulation parameter for controlling driving of the transportation means within first historical duration before the first moment; and determining the driver model based on the historical manipulation parameter sequence.

With reference to the first aspect, in some implementations of the first aspect, the method further includes: obtaining a second manipulation parameter, a second motion status parameter, and second environment information, where the second manipulation parameter is a manipulation parameter for controlling driving of the transportation means at a second moment, the second motion status parameter indicates a motion status of the transportation means at the second moment, and the second environment information indicates an ambient environment in which the transportation means is located at the second moment; determining a second expected manipulation parameter based on the second motion status parameter and the second environment information and by using the driver model; and the determining, based on the first manipulation parameter and the first expected manipulation parameter, whether there is abnormal driving behavior includes: determining, based on a first manipulation parameter sequence and a first expected manipulation parameter sequence, whether there is abnormal driving behavior, where the first manipulation parameter sequence includes the first manipulation parameter and the second manipulation parameter, and the first expected manipulation parameter sequence includes the first expected manipulation parameter and the second expected manipulation parameter.

Because manipulation performed by the user on the transportation means is usually coherent, in embodiments of this application, the abnormal driving behavior is identified based on the first manipulation parameter sequence and the first expected manipulation parameter sequence. This helps improve accuracy of identifying the abnormal driving behavior.

With reference to the first aspect, in some implementations of the first aspect, the method further includes: determining a first confidence based on the first manipulation parameter sequence and the first expected manipulation parameter sequence, where the first confidence represents a similarity between the first manipulation parameter sequence and the first expected manipulation parameter sequence; and the determining, based on a first manipulation parameter sequence and a first expected manipulation parameter sequence, whether there is abnormal driving behavior includes: when the first confidence is greater than or equal to a first threshold, determining, based on the first manipulation parameter sequence and the first expected manipulation parameter sequence, whether there is abnormal driving behavior.

In embodiments of this application, when the first confidence is greater than or equal to the first threshold, whether there is abnormal driving behavior is determined based on the first manipulation parameter sequence and the first expected manipulation parameter sequence, so that anomaly detection caused by environment information, a motion status parameter, a driver model running error, and the like can be avoided. This can improve accuracy of detecting the abnormal driving behavior.

With reference to the first aspect, in some implementations of the first aspect, the method further includes: when the first confidence is greater than or equal to a second threshold, optimizing the first prediction model based on the first manipulation parameter sequence and the first expected manipulation parameter sequence, where the second threshold is less than the first threshold.

In embodiments of this application, when the first confidence is greater than or equal to the second threshold, the driver model is optimized based on the first manipulation parameter sequence, so that a manipulation parameter output by the driver model can better conform to a driving habit of the user. This can improve accuracy of detecting the abnormal driving behavior.

With reference to the first aspect, in some implementations of the first aspect, the method further includes: obtaining first information, where the first information indicates a user manipulation preference; and determining the driver model based on the first information.

In embodiments of this application, because the driver model is determined based on the user manipulation preference, differentiated configurations of the driver model can be implemented. This can improve accuracy of the method for identifying abnormal driving behavior.

With reference to the first aspect, in some implementations of the first aspect, the method further includes: determining an evaluation function based on the first information; and the determining, based on a first manipulation parameter sequence and a first expected manipulation parameter sequence, whether there is abnormal driving behavior includes: determining a value of the evaluation function based on the first manipulation parameter sequence and the first expected manipulation parameter sequence; and when the value of the evaluation function is greater than or equal to a third threshold, determining that there is abnormal driving behavior.

In embodiments of this application, the evaluation function is determined based on the first information, so that evaluation criteria for corresponding abnormal driving behavior can be set based on different user manipulation preferences, to reduce a possibility of misjudgment. This improves accuracy of identifying the abnormal driving behavior.

With reference to the first aspect, in some implementations of the first aspect, the method further includes: determining a working condition type of the transportation means based on the first motion status parameter and/or the first status parameter; and determining the evaluation function based on the working condition type of the transportation means.

In embodiments of this application, the working condition type of the transportation means is determined, and the evaluation function is determined accordingly, so that evaluation criteria for corresponding abnormal driving behavior can be set based on various scenarios in actual driving of the user, to reduce a possibility of misjudgment. This can improve accuracy of identifying the abnormal driving behavior.

With reference to the first aspect, in some implementations of the first aspect, the method further includes: when it is determined that there is abnormal driving behavior, giving a user a prompt that there is abnormal driving behavior.

In embodiments of this application, when it is determined that there is abnormal driving behavior, the user is prompted to concentrate on driving, to reduce occurrence of a traffic accident.

With reference to the first aspect, in some implementations of the first aspect, the method further includes: when it is determined that there is abnormal driving behavior, controlling the transportation means to be in an autonomous driving mode.

With reference to the first aspect, in some implementations of the first aspect, the transportation means is a vehicle, and the manipulation parameter includes at least one of a steering wheel angle, an accelerator pedal stroke, and a brake pedal stroke.

According to a second aspect, an apparatus for identifying abnormal driving behavior is provided. The apparatus includes: an obtaining module that may be configured to obtain a first manipulation parameter, a first motion status parameter, and first environment information, where the first manipulation parameter is a manipulation parameter for controlling driving of a transportation means at a first moment, the first motion status parameter indicates a motion status of the transportation means at the first moment, and the first environment information indicates an ambient environment in which the transportation means is located at the first moment; and a processing module that may be configured to: determine a first expected manipulation parameter based on the first motion status parameter and the first environment information and by using a driver model, and determine, based on the first manipulation parameter and the first expected manipulation parameter, whether there is abnormal driving behavior.

With reference to the first aspect, in some implementations of the first aspect, the method further includes: obtain a historical manipulation parameter sequence, where the historical manipulation parameter sequence includes at least one manipulation parameter for controlling driving of the transportation means within first historical duration before the first moment; and determine the driver model based on the historical manipulation parameter sequence.

With reference to the second aspect, in some implementations of the second aspect, the obtaining module may be further configured to: obtain a second manipulation parameter, a second motion status parameter, and second environment information, where the second manipulation parameter is a manipulation parameter for controlling driving of the transportation means at a second moment, the second motion status parameter indicates a motion status of the transportation means at the second moment, and the second environment information indicates an ambient environment in which the transportation means is located at the second moment. The processing module may be further configured to determine a second expected manipulation parameter based on the second motion status parameter and the second environment information and by using the driver model. The processing module may be specifically configured to: determine, based on a first manipulation parameter sequence and a first expected manipulation parameter sequence, whether there is abnormal driving behavior, where the first manipulation parameter sequence includes the first manipulation parameter and the second manipulation parameter, and the first expected manipulation parameter sequence includes the first expected manipulation parameter and the second expected manipulation parameter.

With reference to the second aspect, in some implementations of the second aspect, the processing module may be further configured to: determine a first confidence based on the first manipulation parameter sequence and the first expected manipulation parameter sequence, where the first confidence represents a similarity between the first manipulation parameter sequence and the first expected manipulation parameter sequence. The processing module is specifically configured to: when the first confidence is greater than or equal to a first threshold, determine, based on the first manipulation parameter sequence and the first expected manipulation parameter sequence, whether there is abnormal driving behavior.

With reference to the second aspect, in some implementations of the second aspect, the processing module may be further configured to: when the first confidence is greater than or equal to a second threshold, optimize the first prediction model based on the first manipulation parameter sequence, where the second threshold is less than the first threshold.

With reference to the second aspect, in some implementations of the second aspect, the obtaining module may be further configured to obtain first information, where the first information indicates a user manipulation preference; and the processing module may be further configured to determine the driver model based on the first information.

With reference to the second aspect, in some implementations of the second aspect, the processing module may be further configured to determine an evaluation function based on the first information. The processing module may be specifically configured to: determine a value of the evaluation function based on the first manipulation parameter sequence and the first expected manipulation parameter sequence; and when the value of the evaluation function is greater than or equal to a third threshold, determine that there is abnormal driving behavior.

With reference to the second aspect, in some implementations of the second aspect, the processing module may be further configured to: determine a working condition type of the transportation means based on the first motion status parameter and/or the first status parameter; and determine the evaluation function based on the working condition type of the transportation means.

With reference to the second aspect, in some implementations of the second aspect, the processing module may be further configured to: when it is determined that there is abnormal driving behavior, give a user a prompt that there is abnormal driving behavior.

With reference to the second aspect, in some implementations of the second aspect, the processing module may be further configured to: when it is determined that there is abnormal driving behavior, control the transportation means to be in an autonomous driving mode.

With reference to the second aspect, in some implementations of the second aspect, the transportation means is a vehicle, and the manipulation parameter includes at least one of a steering wheel angle, an accelerator pedal stroke, and a brake pedal stroke.

According to a third aspect, an apparatus is provided. The apparatus includes a processor and a memory. The memory is configured to store program instructions. The processor is configured to invoke the program instructions, so that the apparatus performs any possible method according to the first aspect.

According to a fourth aspect, a transportation means is provided. The transportation means includes the apparatus according to any one of the second aspect or the third aspect.

For example, the transportation means may be an intelligent vehicle, a new energy vehicle, or the like.

According to a fifth aspect, a computer program product is provided. The computer program product includes computer program code. When the computer program code is run on a computer, the computer is enabled to perform the method according to the first aspect.

According to a sixth aspect, a computer-readable medium is provided. The computer-readable medium stores program code. When the computer program code is run on a computer, the computer is enabled to perform the method according to the first aspect.

According to a seventh aspect, a chip is provided. The chip includes a processor and a data interface. The processor reads, through the data interface, instructions stored in a memory, so that a computer performs the method according to the first aspect.

## BRIEF DESCRIPTION OF DRAWINGS

FIG. 1 is a functional block diagram of a vehicle according to an embodiment of this application;
FIG. 2 is a diagram of a driving scenario according to an embodiment of this application;
FIG. 3 is a schematic flowchart of a driver model training method according to an embodiment of this application;
FIG. 4 is a schematic flowchart of a method for identifying abnormal driving behavior according to an embodiment of this application;
FIG. 5 is a schematic flowchart of another method for identifying abnormal driving behavior according to an embodiment of this application;
FIG. 6 is a diagram of a structure of an apparatus for identifying abnormal driving behavior according to an embodiment of this application;
FIG. 7 is a schematic flowchart of a system for identifying abnormal driving behavior according to an embodiment of this application;
FIG. 8A and FIG. 8B are a schematic flowchart of optimizing a driver model according to an embodiment of this application;
FIG. 9A and FIG. 9B are another schematic flowchart of identifying abnormal driving behavior according to an embodiment of this application; and
FIG. 10 is a diagram of a structure of an apparatus according to an embodiment of this application.

## DESCRIPTION OF EMBODIMENTS

The following describes technical solutions of embodiments in this application with reference to accompanying drawings.

The following describes technical solutions of embodiments in this application with reference to accompanying drawings.

In this application, a transportation means may include one or more different types of transportation tools or movable objects that operate or move on land (for example, a highway, a road, or a railway), on water surface (for example, a waterway, a river, or an ocean), or in space. For example, the transportation means may include a car, a bicycle, a motorcycle, a train, a subway, an airplane, a ship, an aircraft, a robot, and/or another type of transportation tool or movable object. The following briefly describes functions that the transportation means may have by using an example in which the transportation means is a vehicle.

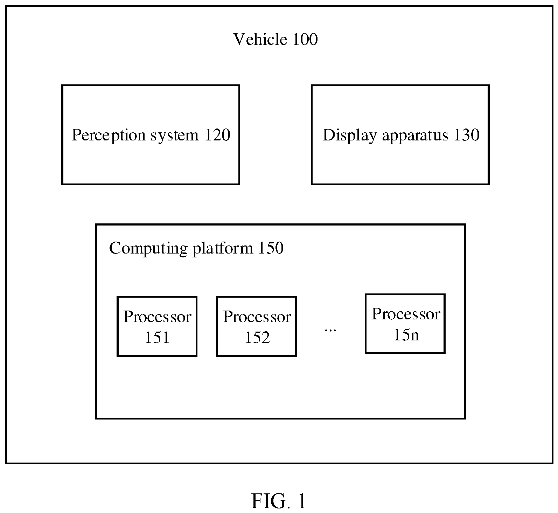

For example, FIG. 1 is a functional block diagram of a vehicle 100 according to an embodiment of this application. The vehicle 100 may include a perception system 120, a display apparatus 130, and a computing platform 150. The perception system 120 may include several types of sensors that sense information about an ambient environment of the vehicle 100. For example, the perception system 120 may include one or more of a positioning system, an inertial measurement unit (inertial measurement unit, IMU), a lidar, a millimeter-wave radar, an ultrasonic radar, and a camera apparatus, where the positioning system may be a global positioning system (global positioning system, GPS), a BeiDou system, or another positioning system.

Some or all of functions of the vehicle 100 may be controlled by the computing platform 150. The computing platform 150 may include processors 151 to 15n (where n is a positive integer), and the processor is a circuit that has a signal processing capability. In an implementation, the processor may be a circuit that has instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory, and the memory may be configured to store instructions. Some or all of the processors 151 to 15n may invoke and execute the instructions in the memory, to implement a corresponding function. The memory may also be configured to store data, such as a road map, route information, and a location, a direction, a speed, and other such vehicle data of the vehicle, and other information. Such information may be used by the vehicle 100 and the computing platform 150 during operation of the vehicle 100 in autonomous, semi-autonomous, and/or manual modes.

The vehicle 100 may include an advanced driving assistant system (advanced driving assistant system, ADAS). The ADAS obtains information around the vehicle by using a plurality of sensors on the vehicle (including but not limited to: the lidar, the millimeter-wave radar, the camera apparatus, an ultrasonic sensor, the global positioning system, the inertial measurement unit), and analyzes and processes the obtained information to implement functions such as obstacle perception, target recognition, vehicle positioning, route planning, and driver monitoring/reminding, so as to improve driving safety, automation, and comfort of the vehicle.

It should be understood that a structure and a function of the vehicle in FIG. 1 should not be construed as a limitation on embodiments of this application.

Optionally, another transportation means may have a function similar to that of the vehicle, for example, may also include a perception system including a computing platform or the like. For brevity, details are not described herein again. It should be understood that this is not limited in embodiments of this application.

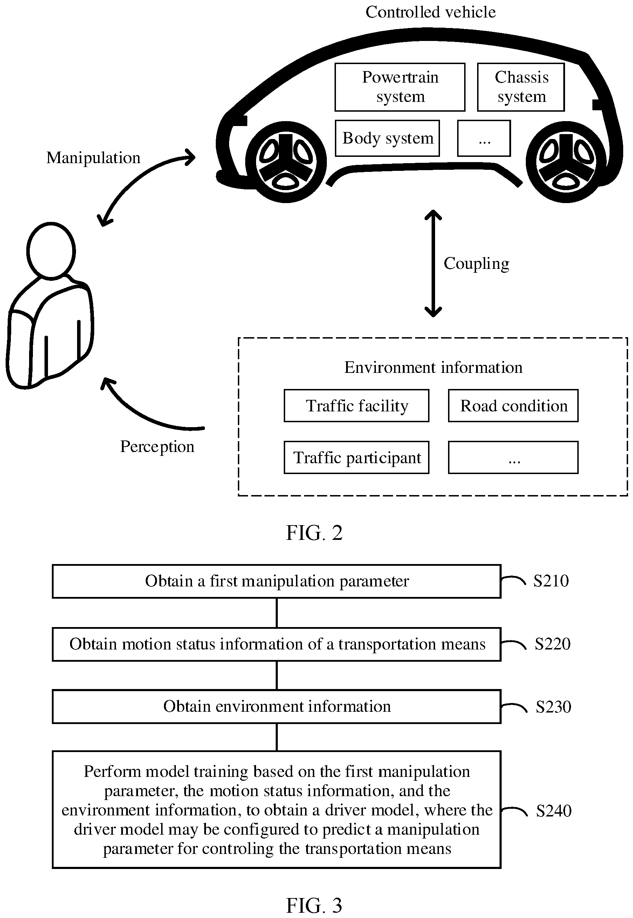

For example, FIG. 2 is a diagram of a driving scenario according to an embodiment of this application. A driver can manipulate a vehicle by perceiving environment information. For example, the vehicle may include a body system, a powertrain system, a chassis system, and the like, to control acceleration, braking, steering, and the like of the vehicle. For another example, the vehicle may be the vehicle 100 shown in FIG. 1. The vehicle may obtain environment information of the vehicle by using a perception system of the vehicle, for example, may obtain information about a traffic facility like a road, a road fence, or an intersection in an environment in which the vehicle is located, may obtain information about a road condition like a road lane line for lane division, a road pit, or a road slope, may obtain information about a traffic participant like a location, a size, or a speed of a surrounding pedestrian, a surrounding vehicle, or the like, and may obtain information about a weather condition like a cloudy day, a sunny day, a rainy day, or a snowy day. For brevity, details are not described herein again.

For example, FIG. 3 is a schematic flowchart of a driver model training method according to an embodiment of this application. The method 200 may include the following steps.

S210: Obtain a first manipulation parameter, where the first manipulation parameter is a manipulation parameter corresponding to a case in which a transportation means is in a manual driving mode.

For example, the first manipulation parameter may be a manipulation parameter for controlling driving of the transportation means. In other words, the first manipulation parameter may be a manipulation parameter output when a user controls driving of the transportation means. For example, the transportation means is a vehicle. The first manipulation parameter may be a manipulation parameter of the transportation means controlled by the user when the vehicle is in a manual driving mode, for example, corresponding information such as a steering wheel angle, an accelerator pedal stroke, or a brake pedal stroke output when the user manipulates a tool that can be manipulated, like a steering wheel, an accelerator pedal, or a brake pedal. For a conventional fuel-powered vehicle, the first manipulation parameter may further include, for example, a clutch pedal stroke. It should be understood that the foregoing method about the first manipulation parameter is merely an example. This is not limited in embodiments of this application.

S220: Obtain motion status information of the transportation means. The motion status information may represent a motion status of the transportation means.

For example, the motion status information may represent a motion status of the transportation means. For example, the motion status information may include a speed, an acceleration, an angular velocity, an angular acceleration, and the like of the transportation means. For example, the motion status information of the transportation means may be determined based on data collected by a perception system-based sensor. For example, the transportation means is a vehicle. A perception system of the vehicle may include an IMU, and an acceleration and/or an angular acceleration of the vehicle may be determined based on a collection result of the IMU. For another example, the vehicle may include a vehicle speed sensor, and a speed of the vehicle may be determined based on data collected by the vehicle speed sensor. For another example, the vehicle may further include a wheel speed sensor, and a speed of the vehicle may be determined based on data collected by the wheel speed sensor. It should be understood that the foregoing manner of obtaining the motion status information of the transportation means is merely an example for ease of description. This is not limited in embodiments of this application.

S230: Obtain environment information of the transportation means.

For example, the environment information may be used to describe an environment in which the transportation means is located. For example, the transportation means is a vehicle. Information about a traffic element like another vehicle or pedestrian around the vehicle may be determined based on data collected by a perception system of the vehicle. An obstacle that may exist in a driving process of the vehicle may be determined based on the information about the traffic element. For example, an area in which another surrounding vehicle is located, and a course angle, a distance, and the like of the surrounding vehicle relative to the vehicle may be obtained, to plan a driving route of the vehicle. Information about a road on which the vehicle is located may be determined based on a sensor and/or Internet of vehicles data of the vehicle. The information about the road may be information such as a road slope, a tilt angle, or a road width. It should be understood that environment constraints to which the transportation means is subject in a driving process may be determined based on the environment information. It should be understood that the foregoing descriptions of the environment information are merely an example for ease of description. This is not limited in embodiments of this application.

It should be understood that some or all of step S210 to step S230 may be performed simultaneously, or step S210 may be performed first, or S220 may be performed first, or S230 may be performed first. This is not limited in embodiments of this application.

S240: Perform model training based on the first manipulation parameter, the motion status information, and the environment information, to obtain a driver model, where the driver model may be configured to predict a manipulation parameter for controlling the transportation means.

For example, there are a correspondence between the first manipulation parameter and the motion status parameter and a correspondence between the first manipulation parameter and the environment information. For example, the first manipulation parameter may be a manipulation parameter for controlling driving of the transportation means at any moment, the first motion status information may indicate a motion status of the transportation means at the moment, and the environment information may indicate an ambient environment in which the transportation means is located at the moment. In other words, at this moment, control of the user on the transportation means based on the motion status and the ambient environment of the transportation means may be reflected as the first manipulation parameter. In view of this, model training may be performed based on the first manipulation parameter, a corresponding motion status parameter, and the environment information, to obtain a driver model for predicting a manipulation parameter for controlling the transportation means. In other words, the transportation means may perceive a real-time environment and a motion status of the transportation means by using the driver model obtained through training, to output a manipulation parameter for simulating autonomous driving.

For example, in practice, because sampling frequencies of sensors may be different, strictly speaking, the obtained motion status parameter and environment information may not indicate a motion status and an ambient environment of the transportation means at a moment corresponding to the first manipulation parameter. When a time difference among a moment corresponding to the motion status parameter, a moment corresponding to the environment information, and the moment corresponding to the first manipulation parameter is within a preset threshold, it may be considered that the moment corresponding to the motion status parameter, the moment corresponding to the environment information, and the moment corresponding to the first manipulation parameter are a same moment. For example, it is intended to obtain a first manipulation parameter, a motion status parameter, and environment information at a moment of 10 seconds (seconds, s). Due to impact of factors such as a sampling frequency in actual operation, the obtained first manipulation parameter may be a manipulation parameter for controlling driving of the transportation means at a moment of 10.05s, the obtained motion status parameter may be a motion status of the transportation means at a moment of 9.91s, and the obtained corresponding environment information may be an ambient environment in which the transportation means is located at a moment of 10.03s. Because a time difference among the corresponding moments is less than or equal to a preset time difference threshold (for example, 0.1s), it may be considered that the obtained motion status parameter and environment information indicate a motion status and an ambient environment of the transportation means at the moment corresponding to the first manipulation parameter. In other words, the moments corresponding to the first manipulation parameter, the motion status parameter, and the ambient environment are a same moment (for example, at a moment of 10s), that is, it may be considered that the obtained motion status parameter indicates a motion status of the transportation means at a moment of 10s, the environment information indicates an ambient environment of the transportation means at a moment of 10s, and the first manipulation parameter is a manipulation parameter for controlling driving of the transportation means at moment of 10s.

For example, model training may be performed based on at least one group of first manipulation parameters and at least one corresponding group of motion status information and environment information, to obtain the driver model. For example, determining the driver model based on a plurality of groups of first manipulation parameters and corresponding motion status information and environment information may be determining the driver model according to an optimization algorithm, for example, a tabu algorithm, a genetic algorithm, a particle swarm optimization algorithm, or an ant colony optimization algorithm, so that a driver model matching actual manipulation behavior of the user can be obtained. For brevity, details are not described herein again.

For example, for users with different driving preferences, manipulation on the transportation means may be different in a same driving scenario. For example, the transportation means is a vehicle. In a same driving scenario, for example, overtaking or a lane change, for a user with an aggressive driving preference and a user with a conservative driving preference, or referred to as a user corresponding to first information that is "radical" and a user corresponding to first information that is "conservative", manipulation for a steering wheel, an accelerator pedal, a brake pedal, a gear, and the like may differ greatly. In view of this, in a same scenario, vehicles driven by the two users may have different motion statuses (for example, different speeds or accelerations), which may be reflected as that the vehicles driven by the two users may have different driving trajectories.

For example, for users with different driving preferences, manipulation on the transportation means may differ greatly in a same driving scenario. In other words, when motion status parameters are the same and environment information is the same, first manipulation parameters for controlling driving of the transportation means by the users with different driving preferences may differ greatly. Therefore, for the users with different driving preferences, different driver models may be obtained through model training, so that driving behavior of the users with different driving preferences may be predicted by using the different driver models, to improve prediction accuracy. For example, the transportation means is a vehicle. For example, a user with a conservative driving preference may use a preview driver model, and a user with an aggressive driving preference may use a driver model obtained through training based on a neural network. In other words, users with different driving styles may use driver models of different types. For another example, a user with a conservative driving preference may use a driver model obtained through training based on a neural network, and a user with an aggressive driving preference may also use the driver model obtained through training based on the neural network, where the two driver models may have different feature parameters. In other words, the users with different driving styles may use driver models of a same type and with different feature parameters.

For example, in a model training process and after the driver model is determined, the driver model may be further optimized and adjusted based on the first manipulation parameter, the motion status information, and the environment information. Optimization and adjustment of the driver model may include a plurality of implementations. In some implementations, the process may include a process of a plurality of iterations. A process of one iteration may include the following steps:

S310: Input motion status information and environment information into a driver model, and process the motion status information and the environment information by using the driver model to output a prediction result, that is, output a manipulation parameter predicted for a transportation means.

S320: Calculate a first loss value based on the predicted manipulation parameter, a first manipulation parameter, and a loss function, where the first loss value may represent a deviation between a prediction result and the first manipulation parameter, and a larger deviation between the prediction result and the first manipulation parameter, in this case, the first loss value is larger.

S330: Adjust the driver model based on the first loss value.

The foregoing describes one iteration process in optimizing the driver model. After one iteration is performed, it may be detected whether an optimization termination condition is met currently. When the termination condition is not met, a next iteration process is performed; or when the optimization termination condition is met, the driver model used in the current iteration process may be output as a driver model finally configured to predict a manipulation parameter of the driver.

The optimization termination condition may be that a quantity of iterations reaches a target quantity of iterations or a loss function meets a preset condition, or may be that a capability of the driver model is not improved within a specific quantity of iterations. The target quantity of iterations may be a preset quantity of iterations, and is used to determine an end occasion of an optimization process of the driver model, to avoid a waste of training resources. The termination condition may be that, in an iteration process, a value of the loss function remains unchanged or does not decrease within a time period. For example, an absolute value of a difference between two or more adjacent loss functions is less than a target value, and it indicates that the driver model has been adjusted to the required effect.

It should be understood that the foregoing manner of optimizing the driver model is merely an example. This is not limited in embodiments of this application.

For example, a cloud server may determine a driver model. The cloud server may further optimize the driver model, and the transportation means may obtain a driver model determined/optimized by the cloud server. Alternatively, after a cloud server determines a driver model, the transportation means may obtain the driver model and subsequently optimize the driver model. Alternatively, the transportation means may determine a driver model and optimize the driver model. This is not limited in embodiments of this application.

In embodiments of this application, the driver model is determined, so that a manipulation parameter of the user for the transportation means can be predicted by using the driver model, and abnormal driving behavior can be detected based on the predicted manipulation parameter.

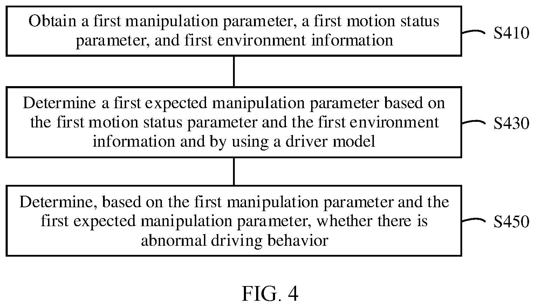

For example, FIG. 4 is a schematic flowchart of a method for identifying abnormal driving behavior according to an embodiment of this application. The method 400 includes the following steps.

S410: Obtain a first manipulation parameter, a first motion status parameter, and first environment information.

For example, a first moment may be any moment. A manipulation parameter for controlling driving of a transportation means at the moment, namely, the first manipulation parameter, may be obtained. In other words, the first manipulation parameter may represent manipulation performed by a user on the transportation means at the first moment, the first motion status parameter may indicate a motion status of the transportation means at the first moment, and the first environment information may indicate an ambient environment in which the transportation means is located at the first moment.

For ease of understanding and description, the manipulation parameter for controlling driving of the transportation means or a manipulation parameter that represents control of the user on the transportation means may be briefly referred to as an active manipulation parameter.

For example, because the user may continuously drive the transportation means within a specific time period, abnormal driving behavior of the user may be continuously detected. For example, an active manipulation parameter within preset duration, and corresponding motion status information and environment information within the duration may be obtained, to determine whether there is abnormal driving behavior within the duration. For another example, to reduce resource usage, a plurality of groups of active manipulation parameters and corresponding motion status information and environment information within the preset duration may be obtained at a specific sampling frequency. The plurality of groups of manipulation parameters may form a sequence in a time sequence.

For ease of understanding and description, in embodiments of this application, active manipulation parameters at a plurality of moments are distinguished. For example, an active manipulation parameter at the first moment may be defined as the first manipulation parameter; and correspondingly, a motion status parameter indicating a motion status of the transportation means at the moment is defined as the first motion status parameter, and environment information indicating the ambient environment of the transportation means at the moment is defined as the first environment information.

An active manipulation parameter at a second moment may be defined as a second manipulation parameter; and correspondingly, a motion status parameter and environment information at the moment may be respectively defined as a second motion status parameter and second environment information. A manipulation parameter for controlling driving of a vehicle within first historical duration before the first moment may be referred to as a historical manipulation parameter, and a sequence including at least one historical manipulation parameter in the first historical duration may be referred to as a historical manipulation parameter sequence. The historical manipulation parameter may be a manipulation parameter for controlling driving of the vehicle during current driving, or may be a manipulation parameter for controlling driving of the vehicle in a previous driving process of the user. The first historical duration may be any duration, for example, 5 minutes or 10 minutes. For brevity, details are not described herein again.

For example, active manipulation parameters at a plurality of moments, and motion status parameters and environment information that correspond to the plurality of moments may be obtained. For example, a first manipulation parameter sequence, a motion status parameter sequence, and an environment information sequence may be obtained. The first manipulation parameter sequence may include active manipulation parameters at a plurality of moments, for example, may include a first manipulation parameter and a second manipulation parameter, and may also include an active manipulation parameter at another moment. The motion status parameter sequence may include corresponding motion status parameters at the plurality of moments. The environment information sequence may include corresponding environment information at the plurality of moments. For example, a plurality of active manipulation parameters within a time window may be obtained based on the time window, and the plurality of active manipulation parameters may form a first manipulation parameter sequence in a specific sequence (for example, a time sequence). Correspondingly, a motion status parameter sequence and an environment information sequence that are within the time window may be determined. Duration of the time window may be fixed duration, or may be duration determined based on a driving scenario, or the like. This is not limited in embodiments of this application.

It should be understood that the foregoing descriptions of obtaining the first manipulation parameter, the first motion status parameter, and the first environment information are merely an example. This is not limited in embodiments of this application.

In some possible implementations, first information may be obtained, and the first information may indicate a user manipulation preference.

For example, the first information may be determined based on a user identifier. For example, the user identifier may be obtained. For example, the user identifier may be determined in a manner of obtaining voiceprint information and a facial feature of the user, obtaining account information of the user, or the like. A user manipulation preference related to the user identifier may be determined based on the user identifier, for example, in a manner of querying a server or querying a local database, so that the first information can be determined based on the user identifier. It should be understood that, for a method for obtaining the user identifier, refer to the conventional technology. For brevity, details are not described herein again.

For example, the first information may be determined based on historical manipulation data. For example, the transportation means is a vehicle. A driving style of a user may be determined based on manipulation performed by the user on the vehicle within a time period. For example, expected driving paths, expected manipulation data, and the like of users with different driving styles in different scenarios may be preset, so that the first information may be determined by matching manipulation data of the user on the vehicle within specific duration (for example, 5 minutes) and the preset expected manipulation data of different driving styles. For another example, driving preferences of a same user in different scenarios may also be different. After a working condition of the transportation means changes, whether the first information changes may be determined based on manipulation performed by the user on the vehicle within specific duration. When the first information changes, correspondingly, a driver model may be determined, so that accuracy of a method for detecting abnormal behavior can be ensured.

For example, the first information may be determined based on user information. For example, the transportation means is a vehicle. When driving the vehicle for the first time, the user may set a driving preference by using a terminal like a mobile phone or a tablet computer, or a cockpit screen like a central display screen of the vehicle. For another example, when driving the vehicle, the user may enter user information such as a gender, an age, and a driving period of the user by using a terminal like a mobile phone or a tablet computer, or a cockpit screen like a central display screen of the vehicle, so that the matched first information may be determined based on the user information and a user feature table stored locally or on a server. The user feature table may be used to determine a mapping relationship between the user information and the first information. For example, the user feature table may be determined by analyzing manipulation preferences of different users such as different ages, genders, driving periods, and education background. For brevity, details are not described herein again.

It should be understood that the foregoing manner of obtaining the first information is merely an example for ease of description. This is not limited in embodiments of this application.

It should be understood that the first information may be in any data format, for example, a number, a letter, or a character string. For example, different labels may represent manipulation preferences. For example, a label like "radical", "conservative", or "neutral" may represent the first information. The label "radical" may indicate that a manipulation manner of the user is radical. For example, the transportation means is a vehicle. For example, when the vehicle is driven to a traffic light intersection with short green time, a user with an aggressive manipulation manner may accelerate through the intersection, and correspondingly, a user with a conservative manipulation manner may slow down to wait for a next traffic light. For example, numbers, letters, and characters may represent different driving styles. For example, numbers "1", "2", "3 ", and the like may represent users with different driving styles. For example, a number "1" represents a user with an aggressive manipulation preference, and a number "5" represents a user with a conservative manipulation manner. It should be understood that the foregoing descriptions of the driving style are merely examples for ease of description, and different manipulation preferences may be distinguished in another manner. This is not limited in embodiments of this application.

It should be understood that operations/behavior such as obtaining, storing, using, and processing user information in this application are compliant use in compliance with local laws and regulations. For example, operations such as obtaining, storing, using, and processing user information in this patent indicate operations performed when personal consent has been obtained.

In some possible implementations, the driver model may be determined based on the first information.

For example, because the first information may indicate a user manipulation preference, a matched driver model may be determined based on the first information. For example, a correspondingly matched driver model is determined based on the first information, for example, in a query manner. For brevity, details are not described herein again.

Because different users may have different manipulation preferences, and a same user may have different manipulation preferences in different working conditions, in embodiments of this application, the first information may be obtained, so that the driver model can be determined based on the first information. This can improve accuracy of detecting the abnormal driving behavior.

S430: Determine a first expected manipulation parameter based on the first motion status parameter and the first environment information and by using the driver model.

For example, based on a motion status parameter and corresponding environment information of the transportation means and by using the driver model, a manipulation parameter, namely, an expected manipulation parameter, of the user for the transportation means may be predicted in the motion status and an ambient environment. The expected manipulation parameter may be a manipulation parameter determined by using the driver model. For example, an expected manipulation parameter at the first moment may be determined by using the driver model determined in the method 200 and based on the ambient environment and the motion status of the transportation means at the first moment. For example, a target speed and/or a target path of the transportation means in this scenario may be planned based on the motion status parameter and the environment information, so that the driver model can output the expected manipulation parameter based on the target speed and/or the target path, to predict manipulation, namely, the first expected manipulation parameter, that is performed by the user on the transportation means and corresponds to a case in which the transportation means is in the motion status and in the environment. It should be understood that the foregoing method for determining the first expected manipulation parameter is merely an example for ease of description. This is not limited in embodiments of this application.

For example, when manipulation parameters output by the user at a plurality of moments, a plurality of corresponding motion status parameters, and a plurality of pieces of corresponding environment information are obtained, a plurality of corresponding expected manipulation parameters may be determined by using the driver model. For example, when the first manipulation parameter sequence is obtained, correspondingly, a first expected manipulation parameter sequence may be determined by using the driver model and based on the corresponding motion status parameter sequence and environment information sequence. The first expected manipulation parameter sequence may include a plurality of expected manipulation parameters. For brevity, details are not described herein again.

In some possible implementations, the driver model may be determined based on a historical manipulation parameter sequence. For example, in a driving process of a vehicle, an active manipulation parameter may be obtained and recorded in real time, so that a matched driver model may be determined based on manipulation performed by the user on the vehicle within specific duration. Alternatively, the driver model may be optimized and adjusted based on the active manipulation parameter within the time, so that accuracy of the method for detecting abnormal behavior can be ensured.

S450: Determine, based on the first manipulation parameter and the first expected manipulation parameter, whether there is abnormal driving behavior.

For example, when the first manipulation parameter deviates greatly from the first expected manipulation parameter, it may be determined that there is abnormal driving behavior. For example, the transportation means is a vehicle, and the manipulation parameter is an accelerator pedal stroke, a brake pedal stroke, and a steering wheel angle. In the obtained first manipulation parameter, the accelerator pedal stroke is 15 centimeters (centimeter, cm), the brake pedal stroke is 0, and the steering wheel angle is 0. That is, the user does not control the vehicle to slow down in this scenario. However, in the expected manipulation parameter determined by using the driver model, the accelerator pedal stroke is 0 centimeters, the brake pedal stroke is 15 centimeters, and the steering wheel angle is 0. That is, the driver model predicts that the user needs to control the vehicle to slow down in this scenario. In view of this, it may be considered that there is abnormal driving behavior. For another example, a threshold of a difference between the first manipulation parameter and the first expected manipulation parameter may be determined in a table lookup manner. When the difference between the first manipulation parameter and the first expected manipulation parameter is greater than or equal to the threshold, it may be determined that there is abnormal driving behavior. It should be understood that the foregoing manner of determining the abnormal driving behavior is merely an example for ease of description. This is not limited in embodiments of this application.

For example, when a plurality of active manipulation parameters are obtained, whether there is abnormal driving behavior may be determined based on the plurality of active manipulation parameters and a plurality of corresponding expected manipulation parameters determined by using the driver model. For example, a deviation between each active manipulation parameter and a corresponding expected manipulation parameter may be determined based on the plurality of active manipulation parameters and the plurality of expected manipulation parameters, and when an accumulated value of deviations between the plurality of active manipulation parameters and the plurality of expected manipulation parameters is greater than or equal to a specified threshold, it may be considered that there is abnormal driving behavior. The specified threshold may be preset in advance, or may be obtained through calculation based on a working condition of the transportation means. This is not limited in this application. For another example, a value of an evaluation function may be determined based on the evaluation function, the plurality of active manipulation parameters, and the expected manipulation parameters, so as to determine whether there is abnormal driving behavior.

For example, the transportation means is a vehicle. For example, the first manipulation parameter may include a steering wheel angle, an accelerator pedal stroke, a brake pedal stroke, and the like that are output by the user. Correspondingly, the first expected manipulation parameter may also include a steering wheel angle, an accelerator pedal stroke, a brake pedal stroke, and the like that are determined by using the driver model. For ease of description, in subsequent embodiments of this application, $(\delta, \alpha, F_b)$ represents the first manipulation parameter, where $\delta$ may represent the steering wheel angle output by the user, $\alpha$ may represent the accelerator pedal stroke output by the user, and $F_b$

may represent the brake pedal stroke output by the user. The accelerator pedal stroke and the brake pedal stroke may be an actual pedal stroke or a normalized pedal stroke (for example, a pedal stroke output by the user is normalized by using a total pedal stroke). Correspondingly, $(\delta_m, \alpha_m, F_{bm})$ represents the first expected manipulation parameter, where $\delta_m$ may represent the steering wheel angle determined by using the driver model, $\alpha_m$ may represent the accelerator pedal stroke determined by using the driver model, and $F_{bm}$ may represent the brake pedal stroke determined by using the driver model. It should be understood that the first manipulation parameter and the first expected manipulation parameter may alternatively be other manipulation parameters such as a vehicle gear. For brevity, examples are not described one by one herein. It should be understood that the foregoing representation manners of the first manipulation parameter and the first expected manipulation parameter are merely examples for ease of description. This is not limited in embodiments of this application.

For example, a first confidence may be determined based on the first manipulation parameter and the first expected manipulation parameter, where the first confidence may indicate a similarity between the first manipulation parameter and the first expected manipulation parameter. For example, the transportation means is a vehicle. A residual vector $\vec{\varepsilon}$ between the first manipulation parameter and the first expected manipulation parameter may be determined based on the first manipulation parameter $(\delta, \alpha, F_b)$ and the first expected manipulation parameter $(\delta_m, \alpha_m, F_{bm})$, where $\vec{\varepsilon} = (\varepsilon_1, \varepsilon_2, \varepsilon_3)$, $\varepsilon_1 = (\delta - \delta_m)$, $\varepsilon_2 = (\alpha - \alpha_m)$, and $\varepsilon_3 = (F_b - F_{bm})$. To be specific, elements in the residual vector may represent differences between a plurality of manipulation parameters output by the user and a plurality of corresponding manipulation parameters predicted by using the driver model. Correspondingly, a length $|\vec{\varepsilon}|$ of the residual vector may represent a degree of difference between the first manipulation parameter and the first expected manipulation parameter. A larger length of the residual vector may indicate a larger difference between the first manipulation parameter and the first expected manipulation parameter, where $|\vec{\varepsilon}| = \sqrt{\varepsilon_1^2 + \varepsilon_2^2 + \varepsilon_2^2}$. In some possible implementations, for ease of representation and statistics collection, the length of the residual vector may be mapped to an interval [0,1], to represent the similarity between the first manipulation parameter and the first expected manipulation parameter, that is, the first confidence may be a function of the length of the residual vector. For example, $\gamma$ represents the first confidence, where $\gamma = 1 - 2 * \arctan(|\vec{\varepsilon}|) / \pi$. A larger first confidence $\gamma$ may indicate a higher similarity between the first manipulation parameter and the first expected manipulation parameter.

It should be understood that the foregoing manner of determining the first confidence is merely an example for ease of description, and the first confidence may be determined in another manner, for example, different weights may be set for a plurality of manipulation parameters based on impact of manipulation parameters such as a steering wheel angle and an accelerator pedal stroke on driving safety, to determine the first confidence based on the weights. It should be understood that the manner of determining the first confidence is not limited in embodiments of this application.

For example, when the first confidence is greater than or equal to a first threshold, whether there is abnormal driving behavior may be determined based on the first manipulation parameter and the first expected manipulation parameter.

In embodiments of this application, when the first confidence is greater than or equal to the first threshold, there is good compliance between the first manipulation parameter and the first expected manipulation parameter, and it may be considered that the driver model is in a normal running state. In view of this, whether there is abnormal driving behavior is determined based on the first manipulation parameter and the first expected manipulation parameter, so that misjudgment of the abnormal driving behavior can be reduced.

For example, whether there is abnormal driving behavior may be determined based on a plurality of active manipulation parameters and a plurality of expected manipulation parameters within first duration. The first duration may be duration of a sampling time window of an active manipulation parameter, or may be duration of a time window for detecting abnormal driving behavior. The plurality of first manipulation parameters are in a one-to-one correspondence with the plurality of first expected manipulation parameters.

In embodiments of this application, abnormal driving behavior within the first duration may be detected based on the plurality of active manipulation parameters and the corresponding expected manipulation parameters within the first duration. Because manipulation performed by the user on the transportation means is usually coherent, detection and identification performed on abnormal driving behavior based on a plurality of manipulation parameters output by the user within the first duration help improve accuracy of detecting and identifying the abnormal driving behavior.

For example, in a process in which the user manipulates the transportation means, abnormal driving behavior of the user may be detected within a time window. Duration of the time window may be the first duration. Within the first duration, the user may output a plurality of groups of active manipulation parameters. Correspondingly, the driver model may also output a plurality of groups of expected manipulation parameters. For example, the plurality of groups of active manipulation parameters may form a first manipulation parameter sequence in a preset sorting manner. Correspondingly, the plurality of groups of corresponding expected manipulation parameters may form a first expected manipulation parameter sequence. The first manipulation parameter sequence and the first expected manipulation parameter sequence may have a same sorting manner. To be specific, the first manipulation parameter sequence may include active manipulation parameters at N moments, the first expected manipulation parameter sequence may include expected manipulation parameters at N moments, and an active manipulation parameter in the first manipulation parameter sequence may be in a one-to-one correspondence with an expected manipulation parameter in a same ranking in the first expected manipulation parameter sequence, where N is a positive integer greater than or equal to 2. For example, the transportation means is a vehicle. For example, $(\delta_i, \alpha_i, F_{bi})$ may represent an $i^{th}$ group of active manipulation parameters (for example, may be active manipulation parameters at the first moment) in the first manipulation parameter sequence. Correspondingly, $(\delta_{mi}, \alpha_{mi}, F_{bmi})$ may represent an $i^{th}$ group of expected manipulation parameters (for example, may be expected manipulation parameters at the first moment predicted by using the driver model) in the first expected manipulation parameter sequence. Correspondingly, $\vec{\varepsilon}_i = (\varepsilon_{1i}, \varepsilon_{2i}, \varepsilon_{3i})$ may represent a residual vector between the $i^{th}$ group of active manipulation parameters in the first manipulation parameter sequence and the corresponding expected manipulation parameters. A sequence of a plurality of residual vectors formed based on rankings of a plurality of groups of active manipulation parameters may be briefly referred to as a residual sequence, where i is a positive integer less than or equal to N.

For example, the first confidence may also indicate similarities between the plurality of groups of active manipulation parameters and the plurality of groups of expected manipulation parameters. For example, the transportation means is a vehicle. Within the first duration, n groups of active manipulation parameters $(\delta_i, \alpha_i, F_{bi})$ and expected manipulation parameters $(\delta_{mi}, \alpha_{mi}, F_{bmi})$ may be included. Correspondingly, a residual vector $\vec{\varepsilon}_i = (\varepsilon_{1i}, \varepsilon_{2i}, \varepsilon_{3i})$ may be determined, where n is a positive integer greater than or equal to 2, and i is a positive integer less than or equal to n. For example, the similarities between the plurality of groups of active manipulation parameters and the plurality of groups of expected manipulation parameters may be determined according to a Euclidean distance. For ease of description, d represents the Euclidean distance, where

$$d = \frac{1}{n}\sum_{i=1}^{n}\sqrt{\varepsilon_{1i}^2 + \varepsilon_{2i}^2 + \varepsilon_{3i}^2}$$

. The first confidence $\gamma$ may be a function of the Euclidean distance d. For example, for ease of characterization and statistics collection, the Euclidean distance may be mapped to an interval [0,1], to represent the similarities between the plurality of groups of active manipulation parameters and the plurality of groups of expected manipulation parameters, that is, determine the first confidence. For brevity, details are not described herein again.

It should be understood that the foregoing descriptions of the first manipulation parameter sequence and the first confidence are merely examples for ease of description. This is not limited in embodiments of this application.

For example, when the first confidence is greater than or equal to the first threshold, whether there is abnormal driving behavior may be determined based on a plurality of groups of first manipulation parameters and a plurality of groups of second parameters within the first duration.

In embodiments of this application, when the first confidence is greater than or equal to the first threshold, whether there is abnormal driving behavior is determined based on the first manipulation parameter sequence and the first expected manipulation parameter sequence, so that anomaly detection caused by environment information, a motion status parameter, a driver model running error, and the like can be avoided. This can improve accuracy of detecting the abnormal driving behavior.

In some possible implementations, when the first confidence is greater than or equal to a second threshold, the driver model may be optimized based on the first manipulation parameter sequence, and the second threshold may be less than or equal to the first threshold. For example, when it is determined that there is no abnormal driving behavior, and the first confidence is greater than or equal to the second threshold, the driver model may be optimized based on the first manipulation parameter sequence, so that the expected manipulation parameter determined by using the driver model can better conform to driving behavior of the user. This can improve accuracy of detecting the abnormal driving behavior.

For example, determining, based on the first manipulation parameter sequence and the first expected manipulation parameter sequence, whether there is abnormal driving behavior may be determining, based on a residual sequence and an evaluation function, whether there is abnormal driving behavior. For example, the transportation means a vehicle. The active manipulation parameter and the expected manipulation parameter may be functions that change with time. For example, the active manipulation parameter is $(\delta(t), \alpha(t), F_b(t))$, the expected manipulation parameter is $(\delta_m(t), \alpha_m(t), F_{bm}(t))$, and start time and end time of the time window are respectively represented by $t_1$ and $t_2$. The residual vector may also be a function that changes with time. Whether there is abnormal driving behavior may be determined based on the evaluation function. For example, the evaluation function may be

$$J = \int_{t_1}^{t_2} k_1\varepsilon_1^2(t) + k_2\varepsilon_2^2(t) + k_3\varepsilon_3^2(t)dt,$$ where $k_1$, $k_2$, and $k_3$ may be weight coefficients of manipulation parameters, and $J$ may be a value of the evaluation function or is referred to as a first evaluation value. The first evaluation value may be used to evaluate whether there is abnormal driving behavior. $\varepsilon_1(t)$ may

indicate that a difference between a steering wheel angle output by the user and a steering wheel angle output by using the driver model changes with time. In other words, $\varepsilon_1(t) = \delta(t) - \delta_m(t)$. When a calculation result of the evaluation function or the first evaluation value is greater than or equal to a third threshold, it may be determined that abnormal driving behavior exists in the vehicle. For another example, when a plurality of active manipulation parameters within a time window are determined at a sampling frequency, the evaluation function may be calculated in a discrete manner. For brevity, details are not described herein again.

For example, a working condition of the transportation means may be determined based on at least one of a motion status information and environment information. For example, the transportation means is a vehicle. Based on one or more of a motion status (for example, a speed, an acceleration, or an angular velocity of the vehicle), environment information (for example, a road slope or an expected vehicle speed on the road), and a first manipulation parameter (for example, a steering wheel angle, an accelerator pedal stroke, a brake pedal stroke, and the like that are output by the user) that are of the vehicle, and by using a working condition recognition model, a working condition of the vehicle may be determined in a manner of segment division or feature extraction. For example, it is determined, based on the foregoing parameters, that the vehicle is in a working condition like starting, acceleration, deceleration, turning, highway pilot, obstacle avoidance through a lane change, parking, or another working condition type. For brevity, examples are not described one by one. Further, an evaluation function may be determined based on the determined working condition, to determine whether there is abnormal driving behavior. For example, when the evaluation function sets a plurality of corresponding weight coefficients for a plurality of manipulation parameters, for example, the evaluation function is $J = k_1\varepsilon_1{}^2 + k_2\varepsilon_2{}^2 + k_3\varepsilon_3{}^2$, one or more weight coefficients, for example, at least one of $k_1$, $k_2$, and $k_3$, may be determined based on the working condition, so as to determine the evaluation function. For another example, because driving behavior of the user may be different in different working conditions, the evaluation function may be in different function forms in the different working conditions. For example, the evaluation function may be a primary function, a quadratic function, a power math function, an exponential function, or the like. For brevity, examples are not described herein one by one. It should be understood that the foregoing method for determining the evaluation function based on the working condition of the transportation means is merely an example. This is not limited in embodiments of this application.

For example, the evaluation function may be determined based on the first information. For example, because the driver model may be determined based on the user manipulation preference, correspondingly, the evaluation function may be determined based on the first information. For example, the evaluation function is $J = k_1\varepsilon_1{}^2 + k_2\varepsilon_2{}^2 + k_3\varepsilon_3{}^2$, and a corresponding group of weight coefficients $k_1$, $k_2$, and $k_3$ may be determined based on the first information, so that evaluation criteria for corresponding abnormal driving behavior are set based on different user manipulation preferences, to reduce a possibility of misjudgment. This improves accuracy of identifying the abnormal driving behavior.

For example, the evaluation function may be determined with reference to the working condition and the first information. For example, after the working condition and the first information of the transportation means are determined, for example, a corresponding evaluation function may be determined in a two-dimensional table lookup manner. For brevity, details are not described herein again.

For example, whether there is abnormal driving behavior may be determined based on a plurality of groups of first manipulation parameters and second manipulation parameters that are obtained within the first duration, and based on the evaluation function. For example, the transportation means is a vehicle, duration of a sampling time window is the first duration, and start time and end time of the sampling time window are $t_1$ and $t_2$ respectively. The evaluation function may be

$$J = \int_{t_2}^{t_1} k_1\varepsilon_1{}^2(t) + k_2\varepsilon_2{}^2(t) + k_3\varepsilon_3{}^2(t)dt$$

. Whether there is abnormal driving behavior may be determined based on the evaluation function and residuals between a plurality of groups of first manipulation parameters and a plurality of second manipulation parameters within the time window. For example, when a calculation result of the evaluation function is greater than or equal to the third threshold, it is determined that there is abnormal driving behavior. For another example, when a calculation result of the evaluation function within the second duration is greater than or equal to the third threshold, it may be determined that there is abnormal driving behavior. The second duration may include one or more sampling time windows. It should be understood that the foregoing method for determining the abnormal driving behavior is merely an example. This is not limited in embodiments of this application.

It should be understood that the foregoing descriptions of the evaluation function are merely an example for ease of description. This is not limited in embodiments of this application.

In embodiments of this application, whether there is abnormal driving behavior on the transportation means is determined based on the manipulation parameter output by the user and the manipulation parameter output by the driver model, so that the abnormal driving behavior can be detected without a need to provide an additional sensor. In addition, because the detection manner is directly based on the manipulation parameter of the user for the transportation means, a limitation imposed on a sensor when the sensor detects the abnormal driving behavior can be avoided, and a delay of detecting the abnormal driving behavior can also be reduced. Further, because the driver model is determined based on the user manipulation preference, differentiated configurations of the driver model can be implemented. This can improve accuracy of the method for identifying abnormal driving behavior.

When abnormal driving behavior is detected, a large database may be required to obtain, in a manner of querying a database, a manipulation parameter output by the user when the user normally manipulates the transportation means, and obtaining the database may also require a large engineering workload. In addition, if the database is located in a cloud, communication quality may be affected. Due to a limitation of a storage capacity, an accurate manipulation parameter may not be obtained from a local database. Therefore, in embodiments of this application, the expected manipulation parameter may be considered as a manipulation parameter output when the user normally manipulates the transportation means, and the expected manipulation parameter is obtained by using the driver model, so that limitations on storage space, communication quality, database obtaining, and the like can be avoided. However, in a process in which the user manipulates the transportation means, due to impact of factors such as an ambient environment, a vehicle motion status, and a manipulation habit of the user, using a fixed driver model causes low accuracy of detecting the abnormal driving behavior. In embodiments of this application, determining the driver model based on the historical manipulation sequence can improve accuracy of identifying the abnormal driving behavior. In addition, determining the driver model based on the manipulation preference of the user can also implement differentiated setting of the driver model, and can also improve accuracy of identifying the abnormal driving behavior.

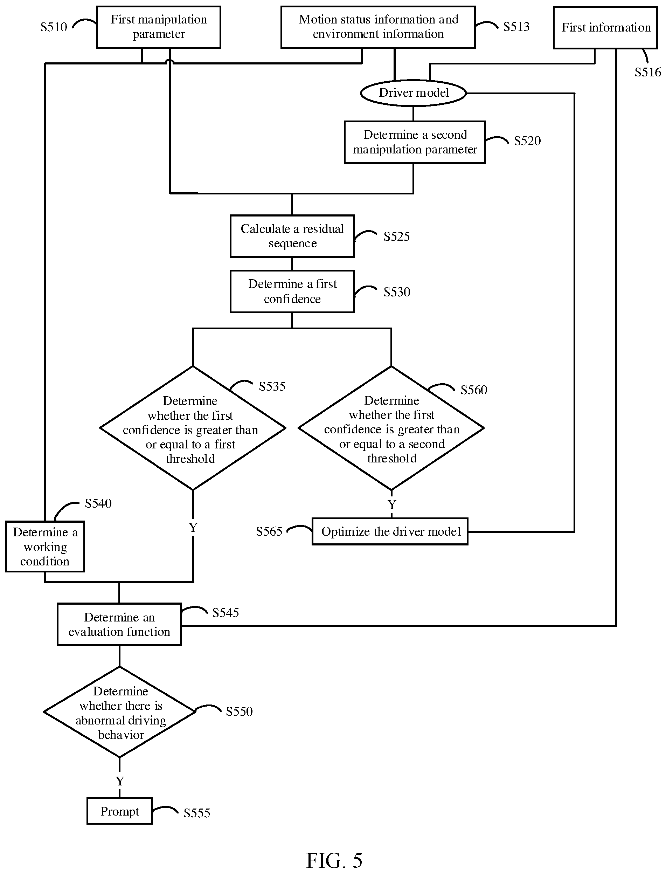

For example, the transportation means is a vehicle. FIG. 5 is a schematic flowchart of a method for identifying abnormal driving behavior according to an embodiment of this application. The method 500 includes some or all of the following steps.

S510: Obtain a first manipulation parameter sequence.

For example, when a user controls driving of the vehicle by perceiving an environment, the user may obtain an active manipulation parameter for controlling driving of the vehicle. For example, the transportation means is a vehicle. A first manipulation parameter may include a steering wheel angle, an accelerator pedal stroke, a brake pedal stroke, and the like. The vehicle may adjust a motion status such as a speed, an acceleration, an angular velocity, and the like of the vehicle based on the first manipulation parameter.

For example, a plurality of active manipulation parameters output by the user within first duration may be obtained. Further, the plurality of active manipulation parameters within the first duration may form a first manipulation parameter sequence. For brevity, details are not described herein again.

For example, a quantity of active manipulation parameters included in the first manipulation parameter sequence may be greater than or equal to a preset threshold. For example, the preset threshold is 6. The first manipulation parameter sequence may include six or more active manipulation parameters. For brevity, details are not described herein again. Alternatively, the preset threshold may be another value (for example, 3 or 10). This is not limited in embodiments of this application.

S513: Obtain motion status information and environment information of the vehicle.

For example, for descriptions of the motion status information and the environment information of the vehicle, refer to steps S220 and S230. For brevity, details are not described herein again.

For example, when a plurality of active manipulation parameters are obtained, correspondingly, a plurality of corresponding motion status parameters and a plurality of pieces of corresponding environment information may be obtained.

It should be understood that the active manipulation parameter, the motion status information, and the environment information that are of the vehicle may be obtained simultaneously, or the active manipulation parameter may be obtained first, or the motion status information may be obtained first, or the environment information may be obtained first. This is not limited in embodiments of this application.

S516: Obtain first information, and determine a driver model based on the first information.

For example, the first information may be determined based on a historical manipulation parameter. For example, the historical manipulation data may be an active manipulation parameter previously stored in a database, for example, driving data retained when the user drives the transportation means last time. The historical manipulation parameter may also be a manipulation parameter generated during current driving. For example, during current driving, if the user has manipulated the transportation means for 15 minutes, an active manipulation parameter within 10 minutes during current driving may be obtained, for example, a manipulation preference of the user may be determined through comparison, matching, or the like, so as to determine the first information. For brevity, details are not described herein again.

For example, the driver model may be determined based on the first information.

It should be understood that, for descriptions of the first information and the driver model, refer to step S410, step S430 and the like. For brevity, details are not described herein again.

S520: Determine a first expected manipulation parameter sequence based on the motion status information and the environment information of the vehicle and by using the driver model.

For example, for descriptions of determining the expected manipulation parameter, refer to step S430. For brevity, details are not described herein again.

For example, when the plurality of active manipulation parameters within the first duration are obtained, a plurality of expected manipulation parameters may be determined based on a plurality of groups of environment information and a plurality of groups of motion status information of the vehicle and by using the driver model. A plurality of groups of expected manipulation parameters may form a first expected manipulation parameter sequence. For brevity, details are not described herein again.

S525: Determine a residual sequence based on the first manipulation parameter sequence and the first expected manipulation parameter sequence.

For example, a plurality of residual vectors may be determined based on a plurality of active manipulation parameters and a plurality of corresponding expected manipulation parameters. The residual vector may represent a difference between a group of a first manipulation parameter and a corresponding second manipulation parameter. Correspondingly, the plurality of residual vectors may form a residual sequence based on a ranking of the first manipulation parameter sequence. For brevity, details are not described herein again.

S530: Determine a first confidence.

For example, the first confidence may be determined based on the residual sequence. For example, the residual sequence of the plurality of groups of active manipulation parameters ($\delta_i$, $\alpha_i$, $F_{bi}$) and the plurality of groups of expected manipulation parameters ($\delta_{mi}$, $\alpha_{mi}$, $F_{bmi}$) may be represented by $\vec{\varepsilon_i} = (\varepsilon_{1i}, \varepsilon_{2i}, \varepsilon_{3i})$. For example, a similarity between the active manipulation parameter and the expected manipulation parameter may be represented by a Euclidean distance

$$d = \frac{1}{n}\sum_{i=1}^{n}\sqrt{\varepsilon_{1i}^2 + \varepsilon_{2i}^2 + \varepsilon_{3i}^2}$$

between a residual vector and a zero point. Further, for ease of statistics collection, the Euclidean distance may be mapped to an interval [0,1], and a mapping result is used as the first confidence $\gamma$, for example, $\gamma = 1 - 2*\arctan(d)/\pi$. It should be understood that the foregoing method for determining the first confidence is merely an example for ease of description. This is not limited in embodiments of this application.

S535: Determine whether the first confidence is greater than or equal to a first threshold, and if the first confidence is greater than the first threshold, proceed to step S545.

For example, for descriptions of the first threshold, refer to step S450. For brevity, details are not described herein again.

Optionally, S540: Determine a working condition of the vehicle based on the first manipulation parameter, the environment information, and the motion status information that are of the vehicle. For example, whether the vehicle is in an accelerated working condition may be determined based on a speed and an acceleration of the vehicle; distribution of obstacles around the vehicle may be determined based on the environment information; and whether the vehicle is in a working condition of obstacle avoidance through a lane change may be determined with reference to the motion status information of the vehicle. It should be understood that, for descriptions of the working condition and a working condition type of the transportation means, refer to a related technology. For brevity, examples are not described herein one by one.

S545: Determine an evaluation function.

For example, the evaluation function may be determined based on the working condition. For example, a form of the evaluation function may be determined in a table lookup manner based on the working condition, or weights of a plurality of manipulation parameters in the evaluation function may be determined based on the working condition. For brevity, examples are not described one by one herein.

For example, the evaluation function may be determined based on the first information, or the evaluation function may be determined based on the first information and with reference to the working condition. For brevity, details are not described herein again.

For example, for descriptions of the evaluation function, refer to step S450. For brevity, details are not described herein again.

S550: Determine whether there is abnormal driving behavior, and when there is abnormal driving behavior, proceed to step S555.

For example, a first evaluation value may be determined based on the residual sequence and the evaluation function. For example, duration of a sampling time window is first duration, start time and end time of the sampling time window are $t_1$ and $t_2$ respectively, the residual sequence is $\vec{\varepsilon_i} = (\varepsilon_{1i}, \varepsilon_{2i}, \varepsilon_{3i})$, and the evaluation function is

$$J = \int_{t_2}^{t_1} k_1\varepsilon_1{}^2(t) + k_2\varepsilon_2{}^2(t) + k_3\varepsilon_3{}^2(t)dt.$$

At least one of weight coefficients $k_1$, $k_2$, and $k_3$ may be determined based on the working condition and/or the first information, so that the evaluation function may be determined. The first evaluation value may be determined based on the residual sequence and the evaluation function. When the first evaluation value is greater than or equal to a third threshold, it may be determined that there is abnormal driving behavior within the sampling time window. For another example, second duration may include a plurality of sampling time windows (for example, five sampling time windows), where duration of each sampling time window is the first duration. A first evaluation value corresponding to each sampling time window may be determined based on a residual sequence of each sampling time window of the first duration. When a quantity of a plurality of first evaluation values that are greater than or equal to a third threshold is not less than a preset quantity (for example, the preset quantity is 3), for example, three first evaluation values of five sampling time windows are greater than or equal to the third threshold, it may be determined that there is abnormal driving behavior within the second duration. For another example, when a plurality of sampling time windows whose first evaluation value is greater than or equal to the third threshold within second duration are continuous and is greater than a preset quantity (for example, the preset quantity is 2), it may be determined that there is abnormal driving behavior. It should be understood that the foregoing method for determining whether there is abnormal driving behavior is merely an example for ease of description. This is not limited in embodiments of this application.

Optionally, S555: Give the user a prompt that there is abnormal driving behavior.

For example, when it is determined that there is abnormal driving behavior, the user may be given a prompt. For example, the transportation means is a vehicle. When it is determined that there is abnormal driving behavior, the user may be prompted with a text, an image, or the like displayed on a screen of the vehicle. For example, the user may be prompted with the words "Please drive carefully" displayed on a control display screen of the vehicle, or the words "Please drive safely" displayed in a front windshield of the vehicle by using a head-up display. In addition, the user may be prompted with a voice. For example, the vehicle reports an alarm by using a buzzer or plays "Please drive carefully" by using a voice. For brevity, examples are not described one by one. It should be understood that the foregoing manner of giving the user a prompt is merely an example for ease of description. This is not limited in embodiments of this application.

Optionally, when it is determined that there is abnormal driving behavior, the first function may be triggered. For example, the first function may be an autonomous driving function, an advanced driver assistance function, or the like. For example, during manual driving, due to a limitation of a blind spot or the like, manipulation performed by the user on the transportation means may be identified as abnormal driving behavior. Because a perception system of the vehicle can better perceive an ambient environment, when it is determined that there is abnormal driving behavior, the autonomous driving function, the advanced driver assistance function, or the like may be directly triggered, or the user may be prompted, by using a voice or a central control screen, for example, by using a voice "It is recommended that you switch to enable advanced assisted driving", whether to enable the autonomous driving function, the advanced driver assistance function, or the like. For another example, in a driving scenario, for example, a highway, after abnormal driving behavior is detected, if the abnormal driving behavior is continuously detected within preset duration, an automatic parking assist function may be triggered to control the vehicle to automatically park on a safe road section. For another example, when a chip or an apparatus for identifying abnormal driving behavior determines that there is abnormal driving behavior, the chip, the apparatus for identifying abnormal driving behavior, or the like may directly trigger the first function, or may send a message to another apparatus, to indicate the another apparatus to trigger the first function. For brevity, details are not described herein again.

Optionally, S560: Determine whether the first confidence is greater than or equal to a second threshold, and if the first confidence is greater than or equal to the second threshold, proceed to step S565.

For example, when the first confidence is greater than or equal to the second threshold, the driver model may be optimized based on the first manipulation parameter sequence.

For example, for descriptions of the second threshold, refer to step S440. For brevity, details are not described herein again.

It should be understood that step S560 and step S535 may be performed simultaneously, or step S535 may be performed first, or step S560 may be performed first. This is not limited in embodiments of this application.

Optionally, S565: Optimize the driver model.

For example, when the first confidence is greater than or equal to the second threshold, the driver model may be optimized based on the residual sequence and an optimization algorithm, for example, a tabu algorithm, a genetic algorithm, a particle swarm optimization algorithm, or ant colony optimization algorithm. Examples are not described herein one by one. For example, the particle swarm optimization algorithm is used. Locations of particles in N-dimensional space may respectively represent control parameters that need to be optimized. A model predictive control method may be used to establish/optimize a driver model, for example, $X_i = (X_1, X_2, X_3, \cdots, X_n) = (N_p, N_c, Q, R, \Delta v, \Delta y, \cdots)$, where $N_p, N_c, Q, R, \Delta v, \Delta y$ may respectively represent a prediction horizon, a control horizon, a control matrix parameter, a state matrix parameter, an expected speed correction amount, and an expected horizontal displacement correction amount, namely, the control parameters that need to be optimized. For example, a speed and a location of each particle may be updated according to $V_{id} = \omega V_{id} + C_1 radm(0,1)(P_{id} - X_{id}) + C_1 radm(0,1)(P_{gd} - X_{id})$ and $X_{id} = X_{id} + V_{id}$, where $C_1$ and $C_2$ may be acceleration factors, $radm(0,1)$ may be a random number between an interval $(0,1)$, $V_{id}$ may be a velocity vector of an $i^{th}$ particle in a $d^{th}$ dimension, $X_{id}$ may represent a location vector of the $i^{th}$ particle in the $d^{th}$ dimension, $\omega$ is an inertia factor and has a nonnegative value, $P_{id}$ is a location vector of a $d^{th}$-dimensional variable of an optimal solution of the $i^{th}$ particle in an iteration process, $P_{gd}$ is a location vector of a $d^{th}$-dimensional variable of an optimal solution of all particles, and d is a positive integer. For brevity, details are not described herein again. It should be understood that, for descriptions of the particle swarm optimization algorithm, refer to a related technology. For brevity, details are not described herein again.

For example, when the first confidence is greater than or equal to the second threshold, the driver model may be optimized based on the first manipulation parameter sequence and the first expected manipulation parameter and by using a loss function. For example, a residual sequence may be determined based on the first manipulation parameter sequence and a manipulation parameter predicted by a driver model optimized according to the particle swarm optimization algorithm, and a first loss value is determined by using the loss function. For example, the loss function may be $cost = f(\bar{\varepsilon}(t))$, where $cost$ may be the first loss value, and $f$ may be a functional relational expression for mapping the residual to the first loss value, that is, a loss function, so as to adjust the driver model based on the first loss value. It should be understood that, for descriptions of the loss function, refer to a related technology. For brevity, details are not described herein again.

For example, the driver model may be optimized by a cloud server, or the driver model may be optimized by a vehicle. For example, after it is determined that the first confidence is greater than or equal to the second threshold, the first manipulation parameter sequence, a plurality of pieces of corresponding environment information, and a plurality of corresponding motion status parameters may be sent to the cloud server, so that the cloud server can optimize the driver model. Correspondingly, the optimized driver model may be configured in the vehicle, so that the vehicle can determine, by using the optimized driver model, whether there is abnormal driving behavior. For another example, after it is determined that the first confidence is greater than or equal to the second threshold, the vehicle may optimize the driver model based on the first manipulation parameter sequence, a plurality of pieces of corresponding environment information, and a plurality of corresponding motion status parameters, so that the driver model can better meet a manipulation preference of the user, to improve detection accuracy.

It should be understood that the foregoing method for optimizing the driver model is merely an example for ease of description. This is not limited in embodiments of this application.

During actual driving, because manipulation performed by the user on the transportation means is continuous, a first manipulation parameter sequence within a time period is obtained, so that abnormal driving behavior is detected accordingly. This helps improve accuracy of detecting the abnormal driving behavior.

For example, the transportation means is a vehicle. When the vehicle includes a driver monitor system (driver monitor system, DMS), in a process in which the user drives the vehicle, due to limitations of factors such as dressing of the user, a camera shooting angle, and a blind spot, the DMS system may fail to identify fatigue driving behavior of the user. However, because all manipulation performed by the user on the transportation means may be reflected through manipulation parameters, the abnormal driving behavior is identified based on an active manipulation parameter and the driver model, so that the abnormal driving behavior of the user can be identified when the DMS system cannot work normally. This helps improve driving safety and reduces occurrence of a traffic accident.

It should be understood that the method 400 may be combined with the method 500. This is not limited in embodiments of this application.

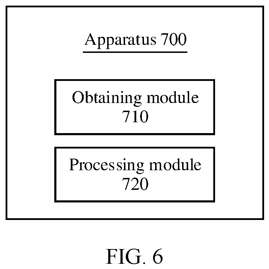

An embodiment of this application further provides an apparatus configured to implement any one of the foregoing methods. For example, an apparatus is provided, including units configured to implement steps performed by the chip, the vehicle, the apparatus for identifying abnormal driving behavior, and the like in any one of the foregoing methods. For example, FIG. 6 is a diagram of a structure of an apparatus for identifying abnormal driving behavior according to an embodiment of this application. The apparatus 700 may include an obtaining module 710 and a processing module 720.

The obtaining module 710 may be configured to obtain a first manipulation parameter, a first motion status parameter, and first environment information, where the first manipulation parameter is a manipulation parameter for controlling driving of a transportation means at a first moment, the first motion status parameter indicates a motion status of the transportation means at the first moment, and the first environment information indicates an ambient environment in which the transportation means is located at the first moment. The processing module 720 may be configured to: determine a first expected manipulation parameter based on the first motion status parameter and the first environment information and by using a driver model; and determine, based on the first manipulation parameter and the first expected manipulation parameter, whether there is abnormal driving behavior.

For example, for descriptions of the first manipulation parameter, the first motion status parameter, and the first environment information, refer to step S410. For brevity, details are not described herein again.

For example, the obtaining module 710 may be further configured to obtain a historical manipulation parameter sequence, and the processing module 720 may be further configured to determine the driver model based on the historical manipulation parameter sequence.

For example, the obtaining module 710 may be further configured to: obtain a second manipulation parameter, a second motion status parameter, and second environment information, where the second manipulation parameter is a manipulation parameter for controlling driving of the transportation means at a second moment, the second motion status parameter indicates a motion status of the transportation means at the second moment, and the second environment information indicates an ambient environment in which the transportation means is located at the second moment. The processing module 720 may be further configured to determine a second expected manipulation parameter based on the second motion status parameter and the second environment information and by using the driver model. The processing module 720 may be specifically configured to: determine, based on a first manipulation parameter sequence and a first expected manipulation parameter sequence, whether there is abnormal driving behavior, where the first manipulation parameter sequence includes the first manipulation parameter and the second manipulation parameter, and the first expected manipulation parameter sequence includes the first expected manipulation parameter and the second expected manipulation parameter.

For example, for descriptions of the first manipulation parameter sequence and the first expected manipulation parameter sequence, refer to steps S410 to S450. For brevity, details are not described herein again.

For example, the processing module 720 may be further configured to: determine a first confidence based on the first manipulation parameter sequence and the first expected manipulation parameter sequence, where the first confidence represents a similarity between the first manipulation parameter sequence and the first expected manipulation parameter sequence. The processing module 720 is specifically configured to: when the first confidence is greater than or equal to a first threshold, determine, based on the first manipulation parameter sequence and the first expected manipulation parameter sequence, whether there is abnormal driving behavior.

For example, for descriptions of the first confidence, refer to step S450. For brevity, details are not described herein again.

For example, the processing module 720 may be further configured to: when the first confidence is greater than or equal to a second threshold, optimize the first prediction model based on the first manipulation parameter sequence and the first expected manipulation parameter sequence, where the second threshold is less than the first threshold.

In some possible implementations, the obtaining module 710 may be further configured to obtain first information, where the first information indicates a user manipulation preference; and the processing module 720 may be further configured to determine the driver model based on the first information.

For example, the processing module 720 may be further configured to determine an evaluation function based on the first information. The processing module 720 may be specifically configured to: determine a value of the evaluation function based on the first manipulation parameter sequence and the first expected manipulation parameter sequence; and when the value of the evaluation function is greater than or equal to a third threshold, determine that there is abnormal driving behavior.

For example, the processing module 720 may be further configured to: determine a working condition type of the transportation means based on the first motion status parameter and/or the first status parameter; and determine the evaluation function based on the working condition type of the transportation means.

For example, the processing module 720 may be further configured to: when it is determined that there is abnormal driving behavior, give a user a prompt that there is abnormal driving behavior.

In some possible implementations, the processing module 720 may be further configured to: when it is determined that there is abnormal driving behavior, control the transportation means to be in an autonomous driving mode.

For example, the transportation means is a vehicle, and the manipulation parameter includes at least one of a steering wheel angle, an accelerator pedal stroke, and a brake pedal stroke.

It should be understood that the apparatus for identifying abnormal driving behavior shown in FIG. 6 may be configured to implement the method 400, and the apparatus shown in FIG. 6 may be further configured to implement the method for identifying abnormal driving behavior described in the method 500. For specific steps, refer to the foregoing descriptions of FIG. 3 to FIG. 5. For brevity, details are not described in embodiments of this application.

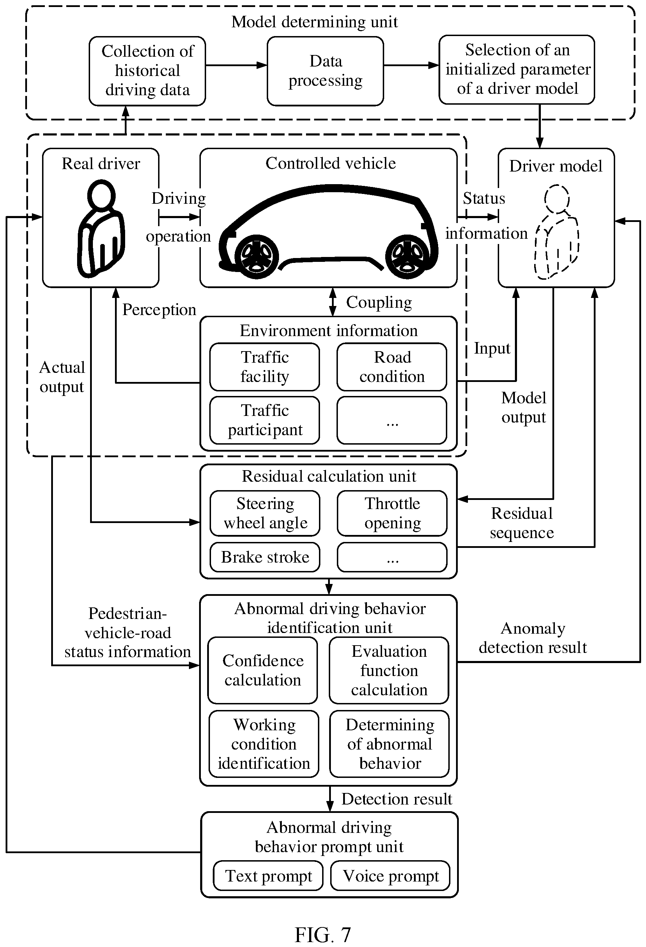

For example, FIG. 7 is a schematic flowchart of a system for identifying abnormal driving behavior. As shown in FIG. 7, the system for identifying abnormal driving behavior may include a model determining unit, a residual calculation unit, an abnormal driving behavior identification unit, an abnormal driving behavior prompt unit, and the like.

In some possible implementations, the model determining unit may be configured to determine an appropriate parameter of a driver model based on provided historical driving data. For example, when a vehicle is powered on, after an identity of a driver is identified, a corresponding parameter of the driver model may be determined based on a historical manipulation parameter of the driver. For another example, a corresponding parameter of the driver model is determined based on a manipulation preference selected by a driver. For brevity, details are not described herein again. The model determining unit may be located in the vehicle, or may be located in a cloud server. When the model determining unit is located in a cloud server, the vehicle may obtain a parameter of the driver model by using a network device or the like. It should be understood that this is not limited in embodiments of this application.

For example, the residual calculation unit may be configured to determine a residual vector based on an active manipulation parameter output by a real driver and an expected manipulation parameter, so as to determine a similarity between the active manipulation parameter and the expected manipulation parameter. For example, the manipulation parameter may include a steering wheel angle, a throttle opening, a brake pedal stroke, and the like. For brevity, details are not described herein again.

For example, the abnormal driving behavior identification unit may be configured to determine and identify abnormal driving behavior. For example, to improve accuracy of identifying the abnormal driving behavior, the abnormal driving behavior identification unit may also implement functions such as confidence calculation, evaluation function calculation, and working condition identification, and may identify the abnormal driving behavior with reference to the foregoing functions. For brevity, details are not described herein again.

For example, the abnormal driving behavior prompt unit may be configured to prompt the user with the abnormal driving behavior. For example, a related apparatus may be controlled to give a prompt, by using a text, a sound, light, or the like, that there is abnormal driving behavior. For brevity, details are not described herein again.

It should be understood that division into the model determining unit, the residual calculation unit, the abnormal driving behavior detection unit, the abnormal driving behavior prompt unit, and the like is merely logical division. For example, the processing module 720 may include the residual calculation unit, or may include the abnormal driving behavior detection unit. For another example, the apparatus 700 may include some or all of the model determining unit, the driver model, the residual calculation unit, the abnormal driving behavior detection unit, and the abnormal driving behavior prompt unit. For brevity, details are not described herein again.

In some possible implementations, the driver manipulates the vehicle based on environment information, and the driver model may output an expected manipulation parameter based on motion status information and the environment information of the vehicle, so that the residual calculation unit may obtain a manipulation parameter actually output by the driver and a manipulation parameter output by the model, to determine a residual sequence. The abnormal driving behavior detection unit may determine, based on the residual sequence, whether there is abnormal driving behavior, for example, identify the abnormal driving behavior when a first confidence meets a preset condition. When it is determined that there is abnormal driving behavior, the abnormal driving behavior prompt unit may give a prompt that there is abnormal driving behavior.

For ease of explanation and description, an example in which the manipulation parameter includes a steering wheel angle $\delta$, an accelerator pedal stroke $\alpha$, and a brake pedal stroke $F_b$ is used. In embodiments of this application, $\delta$ represents a steering wheel angle change rate, and $\dot{\alpha}$ represents a brake pedal stroke change rate. Other symbols are indicated in a similar way. For brevity, examples are not described one by one herein.

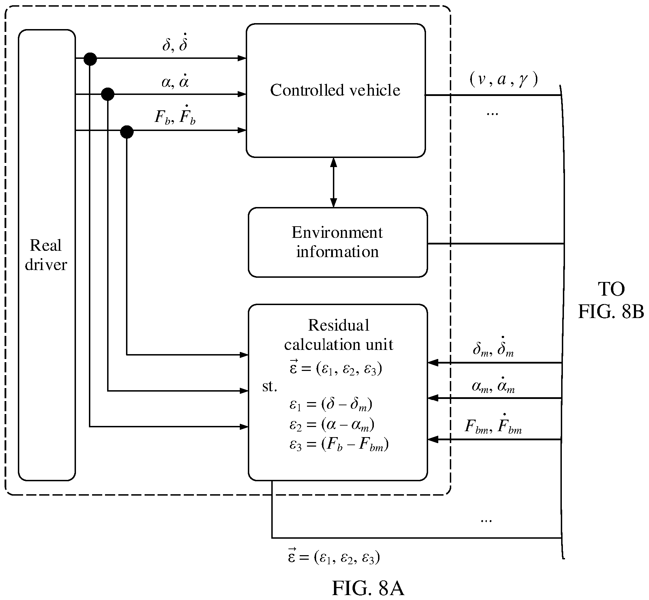

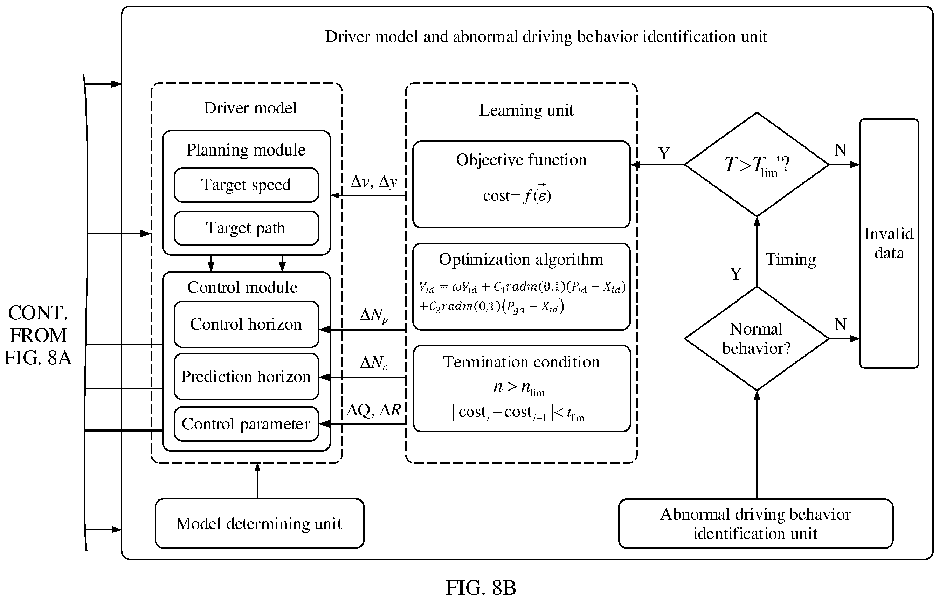

For example, FIG. 8A and FIG. 8B are a schematic flowchart of optimizing a driver model. For example, as shown in FIG. 8A and FIG. 8B, the driver model may include a planning module and a control module.

The planning module may be configured to plan a target speed, a target path, and the like of a vehicle. The control module may be configured to determine an expected manipulation parameter.

For example, as shown in FIG. 8A and FIG. 8B, a driver model and abnormal driving behavior identification unit may obtain motion status information of the vehicle, such as a vehicle speed $v$, an acceleration $\alpha$, and an angular acceleration $\gamma$. A residual calculation unit may determine a residual vector based on a manipulation parameter output by a user and a manipulation parameter output by a driver model, so that an abnormal driving behavior identification unit may identify abnormal driving behavior based on the residual vector. Further, the driver model and abnormal driving behavior identification unit may include a learning unit. The learning unit may be configured to optimize or adjust the driver model, so that the driver model can more accurately identify abnormal driving behavior of a driver. For example, the learning module may optimize the driver model based on an objective function $cost = f(\vec{\varepsilon}(t))$ and an optimization algorithm (for example, a particle swarm optimization algorithm), and when the driver model meets a termination condition (for example, a quantity n of iterations reaches a preset threshold, or a change between objective functions corresponding to two consecutive iterations is less than an error threshold), optimization of the planning module and/or the control module that are/is of the driver model may be terminated. For another example, as shown in FIG. 8A and FIG. 8B, when no abnormal driving behavior is detected, or duration of the abnormal driving behavior is less than or equal to a time threshold $T_{lim'}$, the learning module may be provided with a manipulation parameter corresponding to the time period. Then the learning module can optimize the driver model, so that an output of the driver model is closer to driving behavior of the driver.

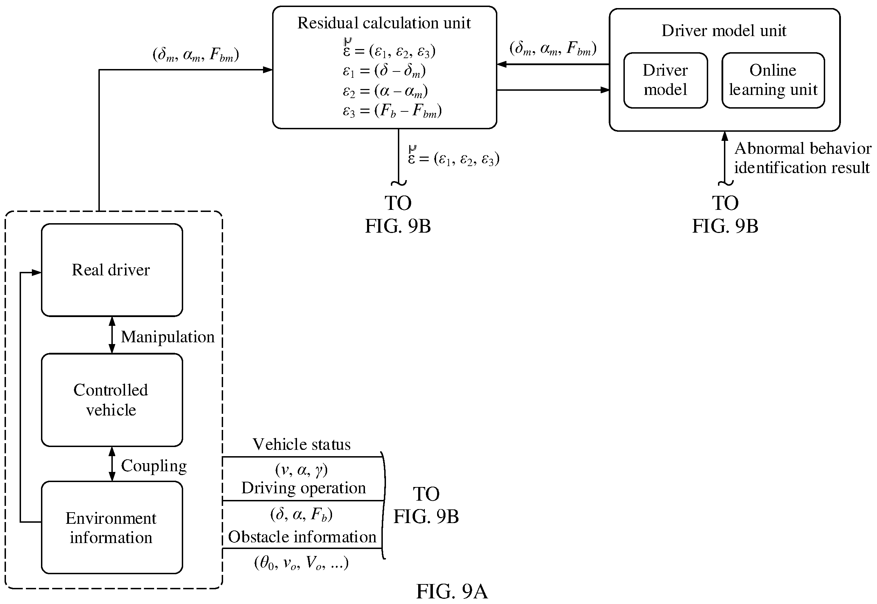

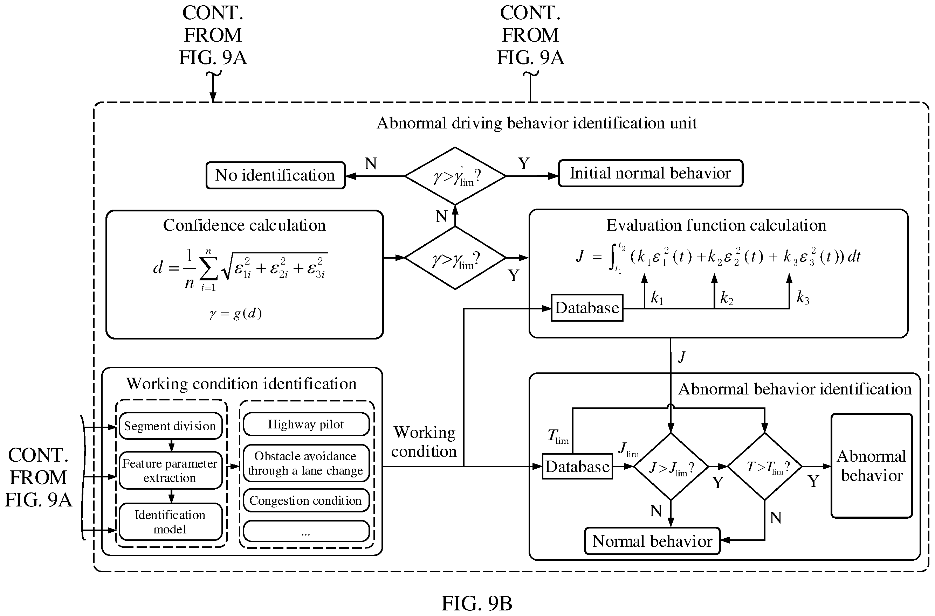

For example, FIG. 9A and FIG. 9B are another schematic flowchart of identifying abnormal driving behavior according to an embodiment of this application.

For example, as shown in FIG. 9A and FIG. 9B, a working condition of a vehicle may be determined based on environment information such as obstacle information, and then based on the working condition of the vehicle, values of weight coefficients (for example, at least one of $k_1$, $k_2$, and $k_3$) in an evaluation function under the working condition may be determined, and a threshold $J_{lim}$ and a time threshold $T_{lim}$ of the evaluation function may also be determined, so as to determine whether there is abnormal driving behavior. Correspondingly, an online learning unit may optimize and adjust a driver model based on an abnormal driving behavior identification result and a corresponding first manipulation parameter, so that an expected manipulation parameter output by a driver model unit can be closer to driving behavior of the driver.

It should be understood that descriptions of FIG. 7 to FIG. 9B are merely examples for ease of description, or may be combined with content of FIG. 2 to FIG. 6. This is not limited in embodiments of this application.

It should be understood that division into units or modules in the foregoing apparatus is merely logical function division. During actual implementation, all or some of the units or modules may be integrated into one physical entity or may be physically separated. In addition, the units or modules in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of each unit of the apparatus. The processor is, for example, a general purpose processor like a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit that has a signal processing capability. In an implementation, the processor may be a circuit that has instruction reading and running capabilities, for example, a CPU, a microprocessor, a GPU, or a DSP. In another implementation, the processor may implement a specific function based on a logical relationship of a hardware circuit, and the logical relationship of the hardware circuit is fixed or reconfigurable. For example, the processor is a hardware circuit implemented by using an application-specific integrated circuit ASIC or a programmable logic device PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

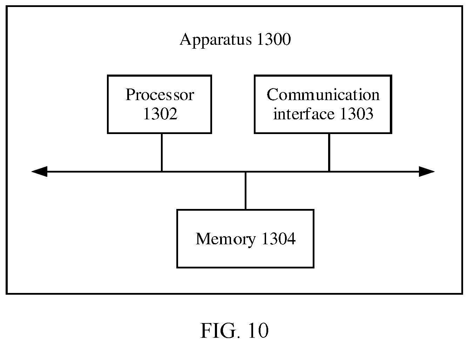

For example, FIG. 10 is a diagram of a structure of an apparatus 1300 according to an embodiment of this application. The apparatus 1300 includes a processor 1302, a communication interface 1303, and a memory 1304. An example of the apparatus 1300 is a chip. Another example of the apparatus 1300 is a computing device.

The processor 1302, the memory 1304, and the communication interface 1303 may communicate with each other through a bus. The memory 1304 stores executable code, and the processor 1302 reads the executable code in the memory 1304 to perform a corresponding method. The memory 1304 may further include a software module required for another running process, for example, an operating system.

For example, the executable code in the memory 1304 is used to implement the method shown in FIG. 3 to FIG. 5. The processor 1302 reads the executable code in the memory 1304, to perform the method shown in FIG. 3 to FIG. 5.

The processor 1302 may be a CPU. The memory 1304 may include a volatile memory (volatile memory, VM), for example, a random access memory (random access memory, RAM). The memory 1304 may further include a non-volatile memory (non-volatile memory, NVM), for example, a read-only memory (read-only memory, ROM), a flash memory, a hard disk drive (hard disk drive, HDD), or a solid state disk (solid state disk, SSD).

An embodiment of this application further provides a vehicle. The vehicle may include the apparatus 700, the apparatus 1300, or an apparatus configured to implement the methods 200 to 500.

An embodiment of this application further provides a computer program product. The computer program product includes computer program code. When the computer program code is run on a computer, the computer is enabled to perform the method.

An embodiment of this application further provides a computer-readable storage medium. The computer-readable medium stores program code. When the computer program code is run on a computer, the computer is enabled to perform the methods in FIG. 3 to FIG. 5.

An embodiment of this application further provides a chip, including at least one processor and a memory. The at least one processor is coupled to the memory, and is configured to read and execute instructions in the memory to perform the method in FIG. 3 to FIG. 5.

A term "at least one" in this application means one or more, and a term "a plurality of" in this application means two or more.

Terms such as "first" and "second" in this application are used to distinguish between same or similar items with basically same roles and functions. It should be understood that there is no logical or timing dependency between "first", "second", and "n^th", and neither a quantity nor an execution sequence is limited. For example, the "first manipulation parameter" and the "second manipulation parameter" are merely used for differentiation, and do not represent that priorities of the "first manipulation parameter" and the "second manipulation parameter" are different.

It should be understood that, in various embodiments of this application, sequence numbers of the processes do not mean execution sequences. The execution sequences of the processes should be determined based on functions and internal logic of the processes, and should not be construed as any limitation on the implementation processes of embodiments of this application.

It should be understood that determining B based on A does not mean that B is determined based only on A, and B may alternatively be determined based on A and/or other information.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in various embodiments of this application, sequence numbers of the processes do not mean execution sequences. The execution sequences of the processes should be determined based on functions and internal logic of the processes, and should not be construed as any limitation on the implementation processes of embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems based on the signal).

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected based on actual situations to achieve the objective of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for identifying abnormal driving behavior, wherein the method comprises:

   obtaining a first manipulation parameter, a first motion status parameter, and first environment information, wherein the first manipulation parameter is a manipulation parameter for controlling driving of a transportation means at a first moment, the first motion status parameter indicates a motion status of the transportation means at the first moment, and the first environment information indicates an ambient environment in which the transportation means is located at the first moment;
   determining a first expected manipulation parameter based on the first motion status parameter and the first environment information and by using a driver model; and
   determining, based on the first manipulation parameter and the first expected manipulation parameter, whether there is abnormal driving behavior.

2. The method according to claim 1, wherein the method further comprises:

   obtaining a historical manipulation parameter sequence, wherein the historical manipulation parameter sequence comprises at least one manipulation parameter for controlling driving of the transportation means within first historical duration before the first moment; and
   determining the driver model based on the historical manipulation parameter sequence.

3. The method according to claim 1 or 2, wherein the method further comprises:

   obtaining a second manipulation parameter, a second motion status parameter, and second environment information, wherein the second manipulation parameter is a manipulation parameter for controlling driving of the transportation means at a second moment, the second motion status parameter indicates a motion status of the transportation means at the second moment, and the second environment information indicates an ambient environment in which the transportation means is located at the second moment;
   determining a second expected manipulation parameter based on the second motion status parameter and the second environment information and by using the driver model; and
   the determining, based on the first manipulation parameter and the first expected manipulation parameter, whether there is abnormal driving behavior comprises:
   determining, based on a first manipulation parameter sequence and a first expected manipulation parameter sequence, whether there is abnormal driving behavior, wherein the first manipulation parameter sequence comprises the first manipulation parameter and the second manipulation parameter, and the first expected manipulation parameter sequence comprises the first expected manipulation parameter and the second expected manipulation parameter.

4. The method according to claim 3, wherein the method further comprises:

   determining a first confidence based on the first manipulation parameter sequence and the first expected manipulation parameter sequence, wherein the first confidence represents a similarity between the first manipulation parameter sequence and the first expected manipulation parameter sequence; and
   the determining, based on a first manipulation parameter sequence and a first expected manipulation parameter sequence, whether there is abnormal driving behavior comprises:
when the first confidence is greater than or equal to a first threshold, determining, based on the first manipulation parameter sequence and the first expected manipulation parameter sequence, whether there is abnormal driving behavior.

5. The method according to claim 4, wherein the method further comprises:
when the first confidence is greater than or equal to a second threshold, optimizing the driver model based on the first manipulation parameter sequence, wherein the second threshold is less than the first threshold.

6. The method according to any one of claims 1 to 5, wherein the method further comprises:

    obtaining first information, wherein the first information indicates a user manipulation preference; and
    determining the driver model based on the first information.

7. The method according to claim 6, wherein the method further comprises:

    determining an evaluation function based on the first information; and
    the determining, based on a first manipulation parameter sequence and a first expected manipulation parameter sequence, whether there is abnormal driving behavior comprises:

    determining a value of the evaluation function based on the first manipulation parameter sequence and the first expected manipulation parameter sequence; and
    when the value of the evaluation function is greater than or equal to a third threshold, determining that there is abnormal driving behavior.

8. The method according to any one of claims 1 to 7, wherein the method further comprises:

    determining a working condition type of the transportation means based on the first motion status parameter and/or the first motion status parameter; and
    determining the evaluation function based on the working condition type of the transportation means.

9. The method according to any one of claims 1 to 8, wherein the method further comprises:

when it is determined that there is abnormal driving behavior, giving a user a prompt that there is abnormal driving behavior.

10. The method according to any one of claims 1 to 9, wherein the method further comprises:
when it is determined that there is abnormal driving behavior, controlling the transportation means to be in an autonomous driving mode.

11. The method according to any one of claims 1 to 10, wherein the transportation means is a vehicle, and the manipulation parameter comprises at least one of a steering wheel angle, an accelerator pedal stroke, and a brake pedal stroke.

12. An apparatus for identifying abnormal driving behavior, wherein the apparatus comprises:

    an obtaining module, configured to obtain a first manipulation parameter, a first motion status parameter, and first environment information, wherein the first manipulation parameter is a manipulation parameter for controlling driving of a transportation means at a first moment, the first motion status parameter indicates a motion status of the transportation means at the first moment, the first environment information indicates an ambient environment in which the transportation means is located at the first moment, and the transportation means is in a manual driving mode; and
    a processing module, configured to: determine a first expected manipulation parameter based on the first motion status parameter and the first environment information and by using a driver model; and determine, based on the first manipulation parameter and the first expected manipulation parameter, whether there is abnormal driving behavior.

13. The apparatus according to claim 12, wherein the obtaining module is further configured to:

    obtain a historical manipulation parameter sequence, wherein the historical manipulation parameter sequence comprises a plurality of groups of manipulation parameters for controlling driving of the transportation means within first historical duration before the first moment; and
    the processing module is further configured to: determine the driver model based on the historical manipulation parameter sequence.

14. The apparatus according to claim 12 or 13, wherein the obtaining module is further configured to:

obtain a second manipulation parameter, a second motion status parameter, and second environment information, wherein the second manipulation parameter is a manipulation parameter for controlling driving of the transportation means at a second moment, the second motion status parameter indicates a motion status of the transportation means at the second moment, and the second environment information indicates an ambient environment in which the transportation means is located at the second moment;

the processing module is further configured to determine a second expected manipulation parameter based on the second motion status parameter and the second environment information and by using the driver model; and

the processing module is specifically configured to:

determine, based on a first manipulation parameter sequence and a first expected manipulation parameter sequence, whether there is abnormal driving behavior, wherein the first manipulation parameter sequence comprises the first manipulation parameter and the second manipulation parameter, and the first expected manipulation parameter sequence comprises the first expected manipulation parameter and the second expected manipulation parameter.

15. The apparatus according to claim 14, wherein the processing module is further configured to:

determine a first confidence based on the first manipulation parameter sequence and the first expected manipulation parameter sequence, wherein the first confidence represents a similarity between the first manipulation parameter sequence and the first expected manipulation parameter sequence; and

the processing module is specifically configured to:

when the first confidence is greater than or equal to a first threshold, determine, based on the first manipulation parameter sequence and the first expected manipulation parameter sequence, whether there is abnormal driving behavior.

16. The apparatus according to claim 15, wherein the processing module is further configured to:
when the first confidence is greater than or equal to a second threshold, optimize the driver model based on the first manipulation parameter sequence, wherein the second threshold is less than the first threshold.

17. The apparatus according to any one of claim 12 to 16, wherein the obtaining module is further configured to:

obtain first information, wherein the first information indicates a user manipulation preference; and

the processing module is further configured to determine the driver model based on the first information.

18. The apparatus according to claim 17, wherein the processing module is further configured to:

determine an evaluation function based on the first information; and

the processing module is specifically configured to:

determine a value of the evaluation function based on the first manipulation parameter sequence and the first expected manipulation parameter sequence; and

when the value of the evaluation function is greater than or equal to a third threshold, determine that there is abnormal driving behavior.

19. The apparatus according to any one of claim 12 to 18, wherein the processing module is further configured to:

determine a working condition type of the transportation means based on the first motion status parameter and/or the first motion status parameter; and

determine the evaluation function based on the working condition type of the transportation means.

20. The apparatus according to any one of claim 12 to 19, wherein the processing module is further configured to:
when it is determined that there is abnormal driving behavior, give a user a prompt that there is abnormal driving behavior.

21. The apparatus according to any one of claim 12 to 20, wherein the processing module is further configured to:
when it is determined that there is abnormal driving behavior, control the transportation means to be in an autonomous driving mode.

22. The apparatus according to any one of claims 12 to 21, wherein the transportation means is a vehicle, and the manipulation parameter comprises at least one of a steering wheel angle, an accelerator pedal stroke, and a brake pedal stroke.

**23.** An apparatus, comprising a processor and a memory, wherein the memory is configured to store program instructions, and the processor is configured to invoke the program instructions to perform the method according to any one of claims 1 to 11.

**24.** A transportation means, comprising the apparatus according to any one of claims 12 to 23.

**25.** A computer-readable storage medium, wherein the computer-readable medium stores program code, and when the program code is run on a computer, the computer is enabled to perform the method according to any one of claims 1 to 11.

**26.** A computer program product, comprising computer program code, wherein when the computer program code is run on a computer, the computer is enabled to perform the method according to any one of claims 1 to 11.

**27.** A chip, wherein the chip comprises a processor and a data interface, and the processor reads, through the data interface, instructions stored in a memory, to perform the method according to any one of claims 1 to 11.

Vehicle 100

Perception system 120

Display apparatus 130

Computing platform 150

Processor 151

Processor 152

...

Processor 15n

FIG. 1

Controlled vehicle

| Powertrain system | Chassis system |
| Body system | ... |

Manipulation →

Coupling ↕

Environment information

| Traffic facility | Road condition |
| Traffic participant | ... |

Perception

FIG. 2

| Obtain a first manipulation parameter | S210 |
| Obtain motion status information of a transportation means | S220 |
| Obtain environment information | S230 |
| Perform model training based on the first manipulation parameter, the motion status information, and the environment information, to obtain a driver model, where the driver model may be configured to predict a manipulation parameter for controling the transportation means | S240 |

FIG. 3

Obtain a first manipulation parameter, a first motion status parameter, and first environment information — S410

Determine a first expected manipulation parameter based on the first motion status parameter and the first environment information and by using a driver model — S430

Determine, based on the first manipulation parameter and the first expected manipulation parameter, whether there is abnormal driving behavior — S450

FIG. 4

S510 — First manipulation parameter

Motion status information and environment information — S513

First information

S516

Driver model

Determine a second manipulation parameter — S520

Calculate a residual sequence — S525

Determine a first confidence — S530

S535 — Determine whether the first confidence is greater than or equal to a first threshold

S560 — Determine whether the first confidence is greater than or equal to a second threshold

S540 — Determine a working condition

Y

Y

S565 — Optimize the driver model

Determine an evaluation function — S545

Determine whether there is abnormal driving behavior — S550

Y

Prompt — S555

FIG. 5

Apparatus 700

Obtaining module
710

Processing module
720

FIG. 6

FIG. 7

FIG. 8A

Driver model and abnormal driving behavior identification unit

Invalid data

$T > T_{\lim}'$? —N

Y

Timing

Normal behavior? —N

Y

Abnormal driving behavior identification unit

**Learning unit**

Objective function

$cost = f(\vec{\varepsilon})$

Optimization algorithm

$V_{id} = \omega V_{id} + C_1 radm(0,1)(P_{id} - X_{id})$
$+ C_2 radm(0,1)(P_{gd} - X_{id})$

Termination condition

$n > n_{\lim}$

$|cost_i - cost_{i+1}| < t_{\lim}$

$\Delta v, \Delta y$

$\Delta N_p$

$\Delta N_c$

$\Delta Q, \Delta R$

**Driver model**

Planning module

Target speed

Target path

Control module

Control horizon

Prediction horizon

Control parameter

Model determining unit

FIG. 8B

34

EP 4 523 988 A1

Residual calculation unit

$$\vec{\varepsilon} = (\varepsilon_1, \varepsilon_2, \varepsilon_3)$$
$$\varepsilon_1 = (\delta - \delta_m)$$
$$\varepsilon_2 = (\alpha - \alpha_m)$$
$$\varepsilon_3 = (F_b - F_{bm})$$

$(\delta_m, \alpha_m, F_{bm})$

$(\delta_m, \alpha_m, F_{bm})$

Driver model unit

Driver model

Online learning unit

$\vec{\varepsilon} = (\varepsilon_1, \varepsilon_2, \varepsilon_3)$

TO
FIG. 9B

Abnormal behavior identification result

TO
FIG. 9B

Real driver

Manipulation

Controlled vehicle

Coupling

Environment information

Vehicle status

$(v, \alpha, \gamma)$

Driving operation

$(\delta, \alpha, F_b)$

Obstacle information

$(\theta_0, v_o, V_o, ...)$

TO
FIG. 9B

FIG. 9A

Abnormal driving behavior identification unit

No identification $\xleftarrow{\text{N}}$ $\gamma > \gamma'_{\text{lim}}?$ $\xrightarrow{\text{Y}}$ Initial normal behavior

N

Confidence calculation

$$d = \frac{1}{n}\sum_{i=1}^{n}\sqrt{\varepsilon_{1i}^2 + \varepsilon_{2i}^2 + \varepsilon_{3i}^2}$$

$$\gamma = g(d)$$

$\gamma > \gamma_{\text{lim}}?$

Y

Evaluation function calculation

$$J = \int_{t_1}^{t_2}(k_1\varepsilon_1^2(t) + k_2\varepsilon_2^2(t) + k_3\varepsilon_3^2(t))\,dt$$

Database $\quad k_1 \quad k_2 \quad k_3$

$J$

Working condition identification

Segment division

Feature parameter extraction

Identification model

Highway pilot

Obstacle avoidance through a lane change

Congestion condition

...

Working condition

Abnormal behavior identification

$T_{\text{lim}}$

Database $\quad J_{\text{lim}}$ $\quad J > J_{\text{lim}}?$ $\xrightarrow{\text{Y}}$ $T > T_{\text{lim}}?$ $\xrightarrow{\text{Y}}$ Abnormal behavior

N

N

Normal behavior

FIG. 9B

EP 4 523 988 A1

Apparatus 1300

Processor
1302

Communication
interface 1303

Memory 1304

FIG. 10

<div align="center">

**INTERNATIONAL SEARCH REPORT**

</div>

| International application No. |
| --- |
| **PCT/CN2022/095804** |

**A. CLASSIFICATION OF SUBJECT MATTER**

B60W40/09(2012.01)i;B60W50/14(2020.01)i

According to International Patent Classification (IPC) or to both national classification and IPC

**B. FIELDS SEARCHED**

Minimum documentation searched (classification system followed by classification symbols)

IPC:B60W,G08G,G05D,G07C

Documentation searched other than minimum documentation to the extent that such documents are included in the fields searched

Electronic data base consulted during the international search (name of data base and, where practicable, search terms used)

CNKI, CNTXT, VEN, WPABSC, CNKI: 驾驶, 异常, 环境, 速度, 加速度, 驾驶员, 司机, 模型, 预期, 预测, 操纵, 操控, 方向盘, 踏板, 制动, 刹车, 加速, drive, abnormal, environment, circumstance, surroundings, driver, model, anticipate, expect, forecast, predict, operate, control, steering wheel, footplate, treadle, pedal, brake, speedup, accelerate

**C. DOCUMENTS CONSIDERED TO BE RELEVANT**

| Category* | Citation of document, with indication, where appropriate, of the relevant passages | Relevant to claim No. |
| --- | --- | --- |
| X | CN 113119981 A (DONGFENG MOTOR GROUP CO., LTD.) 16 July 2021 (2021-07-16) description, paragraphs 0051-0159, and figures 1-5 | 1-27 |
| X | CN 113963533 A (SHANGHAI JUNZHENG NETWORK TECHNOLOGY CO., LTD.) 21 January 2022 (2022-01-21) description, paragraphs 0032-0111, and figures 1-4 | 1-27 |
| A | CN 113291311 A (TONGJI UNIVERSITY) 24 August 2021 (2021-08-24) entire document | 1-27 |
| A | CN 113815631 A (HUMAN HORIZONS (JIANGSU) TECHNOLOGY CO., LTD.) 21 December 2021 (2021-12-21) entire document | 1-27 |
| A | CN 109949438 A (SEMISKY (SHENZHEN) TECHNOLOGY CO., LTD.) 28 June 2019 (2019-06-28) entire document | 1-27 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 February 2023** | **24 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/095804** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113901979 A (ZHEJIANG DIJIA INTELLIGENT TECHNOLOGY CO., LTD.) 07 January 2022 (2022-01-07) entire document | 1-27 |
| A | JP 2008056059 A (EQUOS RESEARCH CO., LTD.) 13 March 2008 (2008-03-13) entire document | 1-27 |
| A | US 2021150827 A1 (D.S. RAIDER LTD.) 20 May 2021 (2021-05-20) entire document | 1-27 |

Form PCT/ISA/210 (second sheet) (July 2022)

<table>
<tr><td colspan="2" rowspan="2">INTERNATIONAL SEARCH REPORT<br>Information on patent family members</td><td colspan="2">International application No.<br><br>**PCT/CN2022/095804**</td></tr>
</table>

| Patent document cited in search report | | | Publication date (day/month/year) | Patent family member(s) | | | Publication date (day/month/year) |
|---|---|---|---|---|---|---|---|
| CN | 113119981 | A | 16 July 2021 | CN | 113119981 | B | 17 June 2022 |
| CN | 113963533 | A | 21 January 2022 | | None | | |
| CN | 113291311 | A | 24 August 2021 | CN | 113291311 | B | 27 June 2022 |
| CN | 113815631 | A | 21 December 2021 | | None | | |
| CN | 109949438 | A | 28 June 2019 | CN | 109949438 | B | 13 July 2021 |
| CN | 113901979 | A | 07 January 2022 | | None | | |
| JP | 2008056059 | A | 13 March 2008 | JP | 4803490 | B2 | 26 October 2011 |
| US | 2021150827 | A1 | 20 May 2021 | EP | 3825966 | A1 | 26 May 2021 |
| | | | | JP | 2021108110 | A | 29 July 2021 |
| | | | | CN | 112906900 | A | 04 June 2021 |

Form PCT/ISA/210 (patent family annex) (July 2022)